(19) Europäisches Patentamt / European Patent Office / Office européen des brevets

(11) **EP 4 406 670 A1**

(12) **EUROPEAN PATENT APPLICATION**
published in accordance with Art. 153(4) EPC

(43) Date of publication:
**31.07.2024 Bulletin 2024/31**

(21) Application number: **22907416.6**

(22) Date of filing: **12.12.2022**

(51) International Patent Classification (IPC):
**B21B 3/02** (2006.01)       **C21D 8/12** (2006.01)
**C21D 9/46** (2006.01)       **C22C 38/00** (2006.01)
**C22C 38/06** (2006.01)       **C22C 38/60** (2006.01)
**B21B 1/22** (2006.01)       **H01F 1/147** (2006.01)

(52) Cooperative Patent Classification (CPC):
**B21B 1/22; B21B 3/02; C21D 8/12; C21D 9/46;
C22C 38/00; C22C 38/06; C22C 38/60;
H01F 1/147;** Y02P 10/20

(86) International application number:
**PCT/JP2022/045666**

(87) International publication number:
**WO 2023/112892 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2021 JP 2021203934**

(71) Applicant: **JFE Steel Corporation
Tokyo 100-0011 (JP)**

(72) Inventors:
• **TANAKA, Takaaki
Tokyo 100-0011 (JP)**
• **OKUBO, Tomoyuki
Tokyo 100-0011 (JP)**

(74) Representative: **Haseltine Lake Kempner LLP
One Portwall Square
Portwall Lane
Bristol BS1 6BH (GB)**

(54) **NON-ORIENTED ELECTROMAGNETIC STEEL SHEET AND METHOD FOR MANUFACTURING SAME**

(57)    A non-oriented electrical steel sheet according to the present invention includes, by mass%, C: 0.010% or less, Si: 1.0% or more and 5.0% or less, Mn: 0.05% or more and 5.0% or less, P: 0.1% or less, S: 0.01% or less, Al: 3.0% or less, N: 0.005% or less, and the balance being Fe and inevitable impurities, wherein an average crystal grain size is 50 $\mu$m or less, and a sum $S_A$ of area ratios of crystal grains with <100> oriented in a rolling direction or a direction perpendicular to the rolling direction and a sum $S_B$ of area ratios of crystal grains with <111> oriented in the rolling direction or the direction perpendicular to the rolling direction satisfy $S_A - S_B \geq 0$.

Processed by Luminess, 75001 PARIS (FR)

**Description**

Field

The present invention relates to a non-oriented electrical steel sheet and a method for manufacturing the same.

Background

In recent years, the demand for energy saving for electric equipment has increased worldwide. Accordingly, electrical steel sheets used for motor cores are required to have more excellent magnetic properties. In addition, recently, there is a strong need for miniaturization and high output in a drive motor or the like of hybrid electric vehicles (HEV) and electric vehicles (EV), and it has been studied to increase the rotation speed of the motor in order to meet this need.

The motor core is divided into a stator core and a rotor core. A large centrifugal force acts on the rotor core of a HEV drive motor since the outer diameter thereof is large. In addition, the rotor core structurally has a very narrow part (width: 1 to 2 mm) that is called a rotor core bridge part, and this part is in a particularly high stress state during motor driving. Thus, to prevent damage to the rotor core due to centrifugal force, the electrical steel sheet used for the rotor core needs to have high strength. On the other hand, since the electrical steel sheet used for the stator core is driven in a high frequency range in order to realize miniaturization and high output of the motor, it is desirable that the electrical steel sheet has a high magnetic flux density and low iron loss in the high frequency range. Thus, it is ideal that the electrical steel sheet used for the motor core has high strength for the rotor core, and has high magnetic flux density and low iron loss in a high frequency range for the stator core.

As just described, even in the electrical steel sheets used for the same motor core, characteristics required for the rotor core and the stator core are significantly different. However, in the manufacture of the motor core, to increase the material yield and productivity, it is desirable that the rotor core material and the stator core material are simultaneously taken from the same material steel sheet by punching, and thereafter, the respective steel sheets are stacked and assembled to the rotor core and the stator core.

As a technique for manufacturing a high-strength and low-iron-loss non-oriented electrical steel sheet for a motor core, for example, Patent Literature 1 discloses a technique in which a high-strength non-oriented electrical steel sheet is manufactured, a rotor core material and a stator core material are collected by punching from the steel sheet and stacked, a rotor core and a stator core are assembled, and then only the stator core is subjected to stress-relief annealing, thereby manufacturing a high-strength rotor core and a low-iron-loss stator core from the same material. As a technique for obtaining a non-oriented electrical steel sheet having low iron loss in a high frequency range, for example, Patent Literature 2 discloses a method for increasing specific resistance of steel by adding Cr and reducing iron loss in a high frequency range.

Citation List

Patent Literature

Patent Literature 1: JP 2008-50686 A
Patent Literature 2: JP H11-343544 A

Summary

Technical Problem

However, according to the study of the inventors of the present invention, in the technique disclosed in Patent Literature 1 described above, the iron loss greatly improves in the magnetic properties after the stress-relief annealing, but there is a problem that the magnetic flux density greatly decreases. On the other hand, Cr is an element that reduces the saturation magnetic flux density. Thus, the technique disclosed in Patent Literature 2 cannot achieve both high magnetic flux density and high-frequency low iron loss, and cannot sufficiently meet the recent demand for non-oriented electrical steel sheets.

The present invention has been made to solve the above problems, and an object of the present invention is to provide a non-oriented electrical steel sheet having high strength and a high magnetic flux density and high-frequency low iron loss even when subjected to stress-relief annealing, and a method for manufacturing the same. Solution to Problem

The inventors of the present invention have extensively conducted studies for solving the above-described problems, and found that it is possible to obtain a non-oriented electrical steel sheet having high strength characteristics suitable for a material for a rotor core and also having a high magnetic flux density and low iron loss in a high frequency range when stress-relief annealing is performed as a material for a stator core, by miniaturizing an average crystal grain size d to 50 $\mu$m or less, and controlling a steel sheet structure such that a sum $S_A$ of area ratios of crystal grains with <100> oriented in a rolling direction or a direction perpendicular to the rolling direction and a sum $S_B$ of area ratios of crystal grains with <111> oriented in the rolling direction or the direction perpendicular to the rolling direction satisfy $S_A$ - $S_B \geq 0$. Further, the inventors of the present invention have also found that the area ratio of crystals facing a specific orientation can be controlled by setting the rapid heat stop temperature, the intermediate retention time, and the like at the time of heating in the annealing step within appropriate ranges.

The present invention has been made based on such findings, and has the following configurations.

To solve the problem and achieve the object, a non-oriented electrical steel sheet according to the present invention includes, by mass%, C: 0.010% or less, Si: 1.0% or more and 5.0% or less, Mn: 0.05% or more and 5.0% or less, P: 0.1% or less, S: 0.01% or less, Al: 3.0% or less, N: 0.005% or less, and the balance being Fe and inevitable impurities, wherein an average crystal grain size is 50 $\mu$m or less, and a sum $S_A$ of area ratios of crystal grains with <100> oriented in a rolling direction or a direction perpendicular to the rolling direction and a sum $S_B$ of area ratios of crystal grains with <111> oriented in the rolling direction or the direction perpendicular to the rolling direction satisfy $S_A$ - $S_B \geq 0$.

Moreover, in the non-oriented electrical steel sheet, a sum Sc of area ratios of crystal grains with <100> oriented in a rolling 45° direction and a rolling -45° direction and a sum $S_D$ of area ratios of crystal grains with <111> oriented in the rolling 45° direction and the rolling -45° direction may satisfy $5 \times Sc - S_D \geq 0$.

Moreover, the non-oriented electrical steel sheet may further include Co in an amount of 0.0005% or more and 0.0050% or less by mass%.

Moreover, the non-oriented electrical steel sheet may further include Zn in an amount of 0.0005% or more and 0.0050% or less by mass%.

Moreover, the non-oriented electrical steel sheet may further include, by mass%, at least one component selected from Groups A to D shown below and one or two or more selected from the group selected from Cu: 0% or more and 0.5% or less, Ni: 0% or more and 0.5% or less, W: 0% or more and 0.05% or less, Ti: 0% or more and 0.005%, Nb: 0% or more and 0.005% or less, V: 0% or more and 0.010% or less, Ta: 0% or more and 0.002% or less, B: 0% or more and 0.002% or less, Ga: 0% or more and 0.005% or less, Pb: 0% or more and 0.002% or less, As: 0% or more and 0.05% or less, and Ge: 0% or more and 0.05% or less.

· Group A; Mo: 0.01% or more and 0.20% or less, · Group B; Cr: 0.1% or more and 5.0% or less, · Group C; Any one or two or more of Ca: 0.001% or more and 0.10% or less, Mg: 0.001% or more and 0.10% or less, and REM: 0.001% or more and 0.10% or less, • Group D; Any one or two of Sn: 0.001% or more and 0.20% or less and Sb: 0.001% or more and 0.20% or less.

Moreover, a method for manufacturing the non-oriented electrical steel sheet according to the present invention is the method for manufacturing the non-oriented electrical steel sheet according to the present invention. The method includes: a hot rolling step of subjecting a steel material having a composition of the non-oriented electrical steel sheet to hot rolling to obtain a hot rolled sheet; a hot-rolled sheet annealing step of subjecting the hot-rolled sheet to hot-rolled sheet annealing as necessary; a pickling step of subjecting the hot-rolled sheet and the hot-rolled sheet subjected to the hot-rolled sheet annealing to pickling; a cold rolling step of subjecting the hot-rolled sheet subjected to the pickling to cold rolling to obtain a cold-rolled sheet; and an annealing step of heating the cold-rolled sheet to an annealing temperature of $T_2$ of 750°C or higher and 850°C or lower and cooling the sheet to obtain a cold-rolled and annealed sheet under conditions of an average temperature rising rate $V_1$ of 50°C/s or more, from 200°C to a holding temperature $T_1$ of 400°C or higher and 600°C or lower, a holding time t of 1 second or more and 10 seconds or less, at the holding temperature $T_1$, and an average temperature rising rate $V_2$ of 15°C/s or more, from the holding temperature $T_1$ to 750°C.

Moreover, the cold rolling step may be performed under conditions of a work roll diameter of a final pass of 150 mm$\phi$ or more, a rolling reduction ratio of the final pass of 15% or more, and a strain rate of the final pass of 100 s$^{-1}$ or more and 1300 s$^{-1}$ or less.

Advantageous Effects of Invention

According to the present invention, it is possible to provide a non-oriented electrical steel sheet having high strength and a high magnetic flux density and high-frequency low iron loss even when subjected to stress-relief annealing, and a method for manufacturing the same. Thus, using the non-oriented electrical steel sheet and the method for manufacturing the same according to the present invention makes it possible to achieve high efficiency of a motor.

Description of Embodiments

Hereinafter, the details of the present invention will be described together with the reasons for limitation.

<Component composition of steel sheet>

First, a preferred component composition of a non-oriented electrical steel sheet (hereinafter, abbreviated as "steel sheet") and a motor core according to the present invention will be described. The unit of the content of the elements in the component composition is "mass%" in each case, and hereinafter, it is simply referred to as "%" unless otherwise specified.

C: 0.010% or less

C is a harmful element that forms carbide during use of a motor, causes magnetic aging, and deteriorates iron loss characteristics of the motor. To avoid magnetic aging, C contained in the steel sheet is set to 0.010% or less. The content is preferably 0.004% or less. The lower limit of the addition amount of C is not particularly specified, but it is preferable to set the lower limit to about 0.0001% because the steel sheet in which C is excessively reduced is very expensive.

Si: 1.0% or more and 5.0% or less

Si has an effect of increasing the specific resistance of steel and reducing iron losses, and has an effect of increasing the strength of steel through solid solution strengthening. To obtain such an effect, the addition amount of Si may be 1.0% or more. On the other hand, when the addition amount of Si exceeds 5.0%, the magnetic flux density remarkably decreases as the saturation magnetic flux density decreases, and thus the upper limit is set to 5.0% or less. Thus, the addition amount of Si is in a range of 1.0% or more and 5.0% or less. The addition amount is preferably in a range of 1.5% or more and less than 4.5%, and more preferably in a range of 2.0% or more and less than 4.0%.

Mn: 0.05% or more and 5.0% or less

Mn is, like Si, a useful element for increasing the specific resistance and strength of steel. To obtain such an effect, it is necessary to contain Mn in an amount of 0.05% or more. On the other hand, addition of more than 5.0% may promote precipitation of MnC to deteriorate the magnetic properties of the motor, and thus the upper limit is set to 5.0%. Thus, the addition amount of Mn is 0.05% or more and 5.0% or less. The amount is preferably in a range of 0.1% or more and 3.0% or less.

P: 0.1% or less

P is a useful element used for adjusting the strength (hardness) of steel. However, when the addition amount of P exceeds 0.1%, toughness decreases and cracking easily occurs during processing, and thus the upper limit is set to 0.1%. The lower limit is not particularly specified, but the lower limit is set to 0.001% because the steel sheet in which P is excessively reduced is very expensive. The addition amount of P is preferably in a range of 0.003% or more and 0.08% or less.

S: 0.01% or less

S is an element that forms fine precipitates and adversely affects the iron loss characteristics of the motor. In particular, when the addition amount of S exceeds 0.01%, the adverse effect becomes significant, and thus the upper limit is set to 0.01%. The lower limit is not particularly specified, but the lower limit is set to 0.0001% because the steel sheet in which S is excessively reduced is very expensive. The addition amount of S is preferably in a range of 0.0003% or more and 0.0080% or less.

Al: 3.0% or less

Al is, like Si, a useful element having an effect of increasing specific resistance of steel and reducing iron losses. To obtain such an effect, it is preferable to add Al in an amount of 0.005% or more. The amount is more preferably 0.010% or more, still more preferably 0.015% or more. On the other hand, addition of more than 3.0% promotes nitriding of the steel sheet surface and may deteriorate magnetic properties, and thus the upper limit is set to 3.0%. The amount is more preferably 2.0% or less.

N: 0.0050% or less

N is an element that forms fine precipitates and adversely affects iron loss characteristics. In particular, when the addition amount of N exceeds 0.0050%, the adverse effect becomes significant, and thus the upper limit is set to 0.0050%. The lower limit is not particularly specified, but the lower limit is set to 0.0005% because the steel sheet in which N is excessively reduced is very expensive. The addition amount of N is preferably in a range of 0.0008% or more and 0.0030% or less.

In the non-oriented electrical steel sheet according to the present invention, the balance other than the above components is Fe and inevitable impurities. Further, according to the required characteristics, in addition to the above component composition, one or two or more selected from Co, Zn, Mo, Cr, Ca, Mg, REM, Sn, Sb, Cu, Ni, W, Ti, Nb, V, Ta, B, Ga, Pb, As, and Ge can be contained in the following ranges.

Co: 0.0005% or more and 0.0050% or less

Co has an effect of increasing the sum $S_A$ of the area ratios of the crystal grains with <100> oriented in a rolling direction or a direction perpendicular to the rolling direction and decreasing the sum $S_B$ of the area ratios of the crystal grains with <111> oriented in the rolling direction or the direction perpendicular to the rolling direction when the rapid heat stop temperature, the intermediate holding time, and the like at the time of heating in the annealing step are set to an appropriate range. That is, $S_A - S_B \geq 0$ can be stably realized by adding a trace amount of Co. To obtain such an effect, the addition amount of Co may be 0.0005% or more. On the other hand, when Co exceeds 0.0050%, the effect reaches saturation and the cost unnecessarily increases, and thus the upper limit is set to 0.0050%. Thus, Co is preferably added in a range of 0.0005% or more and 0.0050% or less.

Zn: 0.0005% or more and 0.0050% or less

Zn has an effect of increasing the sum Sc of the area ratios of the crystal grains with <100> oriented in a rolling 45° direction and a rolling -45° direction and decreasing the sum $S_D$ of the area ratios of the crystal grains with <111> oriented in the rolling 45° direction and the rolling -45° direction when the rapid heat stop temperature, the intermediate holding time, and the like at the time of heating in the annealing step are set to an appropriate range. That is, $5 \times S_C - S_D \geq 0$ can be stably realized by adding a trace amount of Zn. To obtain such an effect, the addition amount of Zn may be 0.0005% or more. On the other hand, when Zn exceeds 0.0050%, the effect reaches saturation and the cost unnecessarily increases, and thus the upper limit is set to 0.0050%. Thus, Zn is preferably added in a range of 0.0005% or more and 0.0050% or less.

Mo: 0.01% or more and 0.20% or less

Mo has an effect of forming fine carbides in steel to increase the strength of the steel sheet. To obtain such an effect, the addition amount of Mo may be 0.01% or more. On the other hand, when the addition amount of Mo exceeds 0.20%, carbides are excessively formed to deteriorate iron loss, and thus the upper limit is set to 0.20%. Thus, Mo is preferably added in a range of 0.01% or more and 0.20% or less.

Cr: 0.1% or more and 5.0% or less

Cr has an effect of increasing specific resistance of steel and reducing iron loss. To obtain such an effect, the addition amount of Cr may be 0.1% or more. On the other hand, when the addition amount of Cr exceeds 0.1%, the magnetic flux density remarkably decreases as the saturation magnetic flux density decreases, and thus the upper limit is set to 5.0%. Thus, Cr is preferably added in a range of 0.1% or more and 5.0% or less.

Ca: 0.001% or more and 0.10% or less

Ca is an element that fixes S as a sulfide and contributes to reduction of iron loss. To obtain such an effect, the addition amount of Ca may be 0.001% or more. On the other hand, when the addition amount of Ca exceeds 0.10%, the effect reaches saturation and the cost unnecessarily increases, and thus the upper limit is set to 0.10%. Thus, Ca is preferably added in a range of 0.001% or more and 0.10% or less.

Mg: 0.001% or more and 0.10% or less

Mg is an element that fixes S as a sulfide and contributes to reduction of iron loss. To obtain such an effect, the addition amount of Mg may be 0.001% or more. On the other hand, when the addition amount of Mg exceeds 0.10%, the effect reaches saturation and the cost unnecessarily increases, and thus the upper limit is set to 0.10%. Thus, Mg is preferably added in a range of 0.001% or more and 0.10% or less.

REM: 0.001% or more and 0.10% or less

REM is an element group that fixes S as sulfide and contributes to reduction of iron losses. To obtain such an effect, the addition amount of REM may be 0.001% or more. On the other hand, when the addition amount of REM exceeds 0.10%, the effect reaches saturation and the cost unnecessarily increases, and thus the upper limit is set to 0.10%. Thus, REM is preferably added in a range of 0.001% or more and 0.10% or less.

Sn: 0.001% or more and 0.20% or less

Sn is an element effective for improving the magnetic flux density and reducing iron losses by improving the texture. To obtain such an effect, the addition amount of Sn may be 0.001% or more. On the other hand, when the addition amount of Sn exceeds 0.20%, the effect reaches saturation and the cost unnecessarily increases, and thus the upper limit is set to 0.20%. Thus, Sn is preferably added in a range of 0.001% or more and 0.20% or less.

Sb: 0.001% or more and 0.20% or less

Sb is an element effective for improving the magnetic flux density and reducing iron losses by improving the texture. To obtain such an effect, the addition amount of Sb may be 0.001% or more. On the other hand, when the addition amount of Sb exceeds 0.20%, the effect reaches saturation and the cost unnecessarily increases, and thus the upper limit is set to 0.20%. Thus, Sb is preferably added in a range of 0.001% or more and 0.20% or less.

Cu: 0% or more and 0.5% or less, Ni: 0% or more and 0.5% or less

Cu and Ni are elements that improve the toughness of steel, and can be appropriately added. However, when the addition amount exceeds 0.5%, the above effect reaches saturation, and thus the upper limit of the addition amount is preferably set to 0.5% for each. More preferably, the addition amount is in a range of 0.01% or more and 0.1% or less.

W: 0% or more and 0.05% or less

W can be appropriately added because it forms fine carbides and improves punch fatigue strength by enhancing the steel sheet strength through precipitation strengthening. On the other hand, when the addition amount exceeds the above range, carbides excessively form, and the iron losses deteriorate. Thus, the addition amount of W is in a range of 0% or more and 0.05% or less. The upper limit of the addition amount is preferably 0.02%.

Ti: 0% or more and 0.005% or less, Nb: 0% or more and 0.005% or less, V: 0% or more and 0.010% or less, and Ta: 0% or more and 0.002% or less

Ti, Nb, V, and Ta can be appropriately added because it forms fine carbonitrides and improves punch fatigue strength by enhancing the steel sheet strength through precipitation strengthening. On the other hand, when the addition amount exceeds the above range, carbonitrides excessively form, and the iron losses deteriorate. Thus, the addition amounts of Ti, Nb, V, and Ta are in the ranges of Ti: 0% or more and 0.005% or less, Nb: 0% or more and 0.005% or less, V: 0% or more and 0.010% or less, and Ta: 0% or more and 0.002% or less, respectively. The upper limits of the addition amounts are preferably Ti: 0.002%, Nb: 0.002%, V: 0.005%, and Ta: 0.001%.

B: 0% or more and 0.002% or less, Ga: 0% or more and 0.005% or less

B and Ga can be appropriately added because it forms fine nitrides and improves punch fatigue strength by enhancing the steel sheet strength through precipitation strengthening. On the other hand, when the addition amount exceeds the above range, nitrides excessively form, and the iron losses deteriorate. Thus, the addition amounts of B and Ga are in the ranges of B: 0% or more and 0.002% or less and Ga: 0% or more and 0.005% or less, respectively. The upper limits of the addition amounts are preferably B: 0.001% and Ga: 0.002%.

Pb: 0% or more and 0.002% or less

Pb can be appropriately added because it forms fine Pb grains and improves punch fatigue strength by enhancing the steel sheet strength through precipitation strengthening. On the other hand, when the addition amount exceeds the above range, Pb grains excessively form, and the iron losses deteriorate. Thus, the addition amount of Pb is in a range of 0% or more and 0.002% or less. The upper limit of the addition amount is preferably 0.001%.

As: 0% or more and 0.05% or less, Ge: 0% or more and 0.05% or less

As and Ge are elements effective for improving the magnetic flux density and reducing iron losses by improving the texture, and can be appropriately added. However, when the addition amount exceeds 0.05%, the above effect reaches saturation. Thus, the upper limit of the addition amount is preferably 0.05% for each. More preferably, the addition amount is in a range of 0.002% or more and 0.01% or less for each.

<Microstructure of steel sheet>

Next, the microstructure of the non-oriented electrical steel sheet according to the present invention will be described.

<<Average crystal grain size d is 50 $\mu$m or less>>

According to the study by the inventors of the present invention, when the average crystal grain size d is coarse, the steel sheet strength decreases. That is, the target strength characteristics can be achieved by setting the average crystal grain size d to 50 $\mu$m or less. The lower limit of the average crystal grain size d is not particularly required to be defined, but is usually 5 $\mu$m or more in the case of being manufactured by the method described in the present invention.

<<Sum $S_A$ of area ratios of crystal grains with <100> oriented in rolling direction or direction perpendicular to rolling direction and sum $S_B$ of area ratios of crystal grains with <111> oriented in rolling direction or direction perpendicular to the rolling direction satisfy $S_A$ - $S_B$ $\geq$ 0>>

According to the study by the inventors of the present invention, it has been found that, for steel having a predetermined component composition, a steel sheet structure in which the sum $S_A$ of the area ratios of crystal grains with <100> oriented in the rolling direction or the direction perpendicular to the rolling direction and the sum $S_B$ of the area ratios of crystal grains with <111> oriented in the rolling direction or the direction perpendicular to the rolling direction satisfy $S_A$ - $S_B$ $\geq$ 0 is obtained, whereby the magnetic flux density of the steel sheet improves, and the iron losses decrease after the stress-relief annealing. The allowable error of the crystal orientation was set to 15°. That is, when $S_A$ - $S_B$ $\geq$ 0, the magnetic flux density and the iron losses satisfy the values required for the motors applied to the HEV, the EV, and the fuel cell electric vehicle (FCEV), and thus $S_A$ - $S_B$ $\geq$ 0 was satisfied. Preferably, $S_A$ - $S_B$ $\geq$ 2% is satisfied, more preferably $S_A$ - $S_B$ $\geq$ 5% is satisfied.

<<Sum $S_C$ of area ratios of crystal grains with <100> oriented in rolling 45° direction and rolling -45° direction and sum $S_D$ of area ratios of crystal grains with <111> oriented in rolling 45° direction and rolling -45° direction satisfy 5 $\times$ Sc - $S_D$ $\geq$ 0>>

According to the study by the inventors of the present invention, it has been found that, in addition to the steel sheet structure, the steel sheet structure in which the sum Sc of the area ratios of the crystal grains with <100> oriented in a rolling 45° direction and a rolling -45° direction and the sum $S_D$ of the area ratios of the crystal grains with <111> oriented in a rolling 45° direction and a rolling -45° direction satisfy 5 $\times$ Sc - $S_D$ $\geq$ 0 reduces the anisotropy of the magnetic properties after the stress-relief annealing. Reduction of anisotropy contributes to improvement of motor efficiency, and thus is more preferable as a material for a motor applied to HEV, EV, and FCEV. Thus, it is preferable to satisfy 5 $\times$ Sc - $S_D$ $\geq$ 0. More preferably, it satisfies 5 $\times$ $S_C$ - $S_D$ $\geq$ 1%.

Next, a method for manufacturing a non-oriented electrical steel sheet according to the present invention will be described.

Briefly speaking, the method for manufacturing a non-oriented electrical steel sheet according to the present invention is a method for obtaining the non-oriented electrical steel sheet according to the present invention described above by sequentially subjecting a steel material having the component composition described above to hot rolling, and hot-rolled sheet annealing, pickling, cold rolling, and annealing as necessary. In the method for manufacturing a non-oriented electrical steel sheet according to the present invention, other commonly known methods may be used as long as the components, cold rolling, and annealing conditions defined in the present invention are within the scope of the present invention.

<Steel material>

The steel material is not particularly limited as long as it is a steel material having the composition described above. The method for smelting the steel material is not particularly limited, and a known smelting method using a converter, an electric furnace, or the like can be adopted. From the viewpoint of productivity and the like, it is preferable to form a slab (steel material) by a continuous casting method after smelting, but the slab may be formed by a known casting method such as an agglomeration-ingot rolling method or a thin slab continuous casting method.

<Hot rolling step>

The hot rolling step is a step of obtaining a hot-rolled sheet by subjecting a steel material having the composition described above to hot rolling. The hot rolling step is not particularly limited as long as it is a step in which a steel material having the composition described above is heated and hot-rolled to obtain a hot-rolled sheet having a predetermined dimension, and a normal hot rolling step can be applied.

Examples of the normal hot rolling step include a hot rolling step of heating a steel material to a temperature of 1000°C or higher and 1200°C or lower, subjecting the heated steel material to hot rolling at a finish-rolling-outlet-side temperature of 800°C or higher and 950°C or lower, and after completion of the hot rolling, subjecting the steel material to appropriate post-rolling cooling (for example, a temperature range of 450°C or higher and 950°C or lower is cooled at an average cooling rate of 20°C/s or more and 100°C/s or less), and winding the steel material at a winding temperature of 400°C or higher and 700°C or lower to form a hot rolled sheet having a predetermined dimension.

<Hot-rolled sheet annealing step>

The hot-rolled sheet annealing step is a step of calcining the hot-rolled sheet by heating and holding the hot-rolled sheet at a high temperature. The hot-rolled sheet annealing step is not particularly limited, and a normal hot-rolled sheet annealing step can be applied. This step is not essential and can be omitted.

<Pickling step>

The pickling step is a step of performing pickling on the steel sheet after the hot-rolled sheet annealing step or the hot-rolled sheet when the hot-rolled sheet annealing step is omitted. The pickling step is not particularly limited as long as it is a step capable of performing pickling to such an extent that the steel sheet after pickling can be subjected to cold rolling, and for example, a normal pickling step using hydrochloric acid, sulfuric acid, or the like can be applied. This pickling step may be performed continuously in the same line as the hot-rolled sheet annealing step, or may be performed in a different line.

<Cold rolling step>

The cold rolling step is a step of performing cold rolling on the pickled sheet that has undergone the pickling step. The cold rolling step is not particularly limited as long as the steel sheet after pickling can be pressed down to a desired sheet thickness, and a normal cold rolling step can be applied. In addition, a cold-rolled sheet having a predetermined dimension may be formed by two or more times of cold rolling with intermediate annealing as necessary. The intermediate annealing condition in this case is not particularly limited, and a normal intermediate annealing step can be applied. Preferably, the cold rolling step is a cold rolling step of performing cold rolling under the conditions that the work roll diameter D of the final pass is 150 mm$\phi$ or more, the rolling reduction ratio r of the final pass is 15% or more, and the strain rate ($\varepsilon'_m$) of the final pass is 100 s$^{-1}$ or more and 1300 s$^{-1}$ or less to obtain a cold-rolled sheet.

(Work roll diameter D of final pass)

In the manufacture of the non-oriented electrical steel sheet according to the present invention, the work roll diameter D of the final pass is 150 mm$\phi$ or more. The reason of the work roll diameter D of the final pass being 150 mm$\phi$ or more is to satisfy $5 \times S_C - S_D \geq 0$ and obtain a desired steel sheet structure. When the work roll diameter D of the final pass is smaller than 150 mm$\phi$, the work roll diameter D is far away from the state of plane compression, and thus the nonuniformity of the shear strain in units of crystal grains is enhanced as compared with the case where the work roll diameter is large. Since nucleation and grain growth in the subsequent annealing step tend to concentrate in

8

a region of a specific orientation, the sum Sc of the area ratios of the crystal grains with <100> oriented in rolling 45° and -45° directions decreases, and the sum $S_D$ of the area ratios of the crystal grains with <111> oriented in the same direction increases. As a result, $5 \times S_C - S_D \geq 0$ cannot be satisfied. On the other hand, when the work roll diameter D of the final pass is 150 mmφ or more, $5 \times S_C - S_D \geq 0$ is satisfied, and a desired steel sheet structure is obtained. The work roll diameter D of the final pass is preferably 170 mmφ or more, and more preferably 200 mmφ or more. The upper limit is not particularly required to be set, but is preferably 700 mmφ because the rolling load increases when the roll diameter is excessively large.

(Rolling reduction ratio r of final pass)

In the manufacture of the non-oriented electrical steel sheet according to the present invention, the rolling reduction ratio r of the final pass is preferably 150 or more. The reason of the rolling reduction ratio r of the final pass being 150 or more is to obtain the effect of a series of cold rolling control and easily obtain a desired steel sheet structure. When the rolling reduction ratio r of the final pass is less than 15%, the reduction ratio is too low, which makes it difficult to control the structure after annealing. On the other hand, when the rolling reduction ratio r of the final pass is 15% or more, the effect of a series of cold rolling control is exhibited. As a result, a desired steel sheet structure tends to be obtained. The rolling reduction ratio r of the final pass is preferably 20% or more. In the present invention, it is not necessary to define the upper limit of the rolling reduction ratio r of the final pass, but the rolling reduction ratio that is too high requires a large device capacity, and it is difficult to control the shape of the cold-rolled sheet. Thus, the rolling reduction ratio r is usually 50% or less.

(Strain rate ($\varepsilon'_m$) in final pass)

In the manufacture of the non-oriented electrical steel sheet according to the present invention, the strain rate ($\varepsilon'_m$) in the final pass is preferably 100 s$^{-1}$ or more and 1300 s$^{-1}$ or less. The reason of the strain rate ($\varepsilon'_m$) in the final pass being set to 100 s$^{-1}$ or more and 1300 s$^{-1}$ or less is to obtain a desired steel sheet structure by setting $5 \times S_C - S_D \geq 0$ while suppressing fracture during rolling. When the strain rate ($\varepsilon'_m$) in the final pass is less than 100 s$^{-1}$, the nonuniformity of the shear strain in the crystal grain unit of the cold-rolled sheet is enhanced, nucleation and grain growth in the subsequent annealing step are likely to concentrate in a region of a specific orientation, and thus, the sum Sc of the area ratios of the crystal grains with <100> oriented in rolling 45° and -45° directions decreases, and the sum $S_D$ of the area ratios of the crystal grains with <111> oriented in the same direction increases. As a result, $5 \times S_C - S_D \geq 0$ cannot be satisfied. The reason is not necessarily clear, but the inventors of the present invention presume that the flow stress is reduced due to the low strain rate, the strain tends to concentrate on the crystal grains of the crystal orientation that is easily deformed, and the strain distribution becomes non-uniform. On the other hand, when the strain rate in the final pass is more than 1300 s$^{-1}$, the flow stress is excessively increased, and brittle fracture during rolling is likely to occur. When the strain rate ($\varepsilon'_m$) in the final pass is 100 s$^{-1}$ or more and 1300 s$^{-1}$ or less, $5 \times S_C - S_D \geq 0$ is satisfied while fracture during rolling is suppressed. The strain rate ($\varepsilon'_m$) in the final pass is preferably 150 s$^{-1}$ or more and preferably 1300 s$^{-1}$ or less. The strain rate ($\varepsilon'_m$) in each pass at the time of cold rolling in the present invention was derived using an approximate expression of Ekelund shown in the following Expression (1).

$$\varepsilon'_m \approx \frac{v_R}{\sqrt{R'h_1}} \frac{2}{2-r} \cdot \sqrt{r} \qquad \cdots (1)$$

Here, $v_R$ is a roll peripheral speed (mm/s), R' is a roll radius (mm), $h_1$ is a roll entrance sheet thickness (mm), and r is a rolling reduction ratio (%).

<Annealing step>

The annealing step is a step of performing annealing on the cold-rolled sheet subjected to the cold rolling step. More specifically, the annealing step is an annealing step of heating a cold-rolled sheet that has undergone the cold rolling step to an annealing temperature $T_2$ of 750°C or higher and 850°C or lower under the conditions of an average temperature rising rate $V_1$ from 200°C to a holding temperature $T_1$ of 400°C or higher and 600°C or lower of 50°C/s or more, a holding time at the holding temperature $T_1$ of 1 second or more and 10 seconds or less, and an average temperature rising rate $V_2$ from the holding temperature $T_1$ to 750°C of 15°C/s or more, and then cooling the sheet to obtain a cold-rolled and annealed sheet. The surface of the cold-rolled and annealed sheet is subjected to an insulating coating after the annealing step, but this method and the type of coating are not particularly limited, and a normal insulating coating step can be applied.

(Holding temperature $T_1$)

In the manufacture of the non-oriented electrical steel sheet according to the present invention, the holding temperature $T_1$ during heating is set to 400°C or higher and 600°C or lower. The reason of the holding temperature $T_1$ being set to 400°C or higher and 600°C or lower is that the sum $S_A$ of the area ratios of the crystal grains with <100> oriented in the rolling direction or the direction perpendicular to rolling and the sum $S_B$ of the area ratios of the crystal grains with <111> oriented in the rolling direction or the direction perpendicular to rolling satisfy $S_A - S_B \geq 0$, and a desired steel sheet structure is obtained. When the holding temperature $T_1$ is lower than 400°C, since the temperature is too low, the holding effect cannot be obtained and $S_B$ becomes high, and as a result, $S_A - S_B \geq 0$ cannot be satisfied. On the other hand, when the holding temperature $T_1$ is 600°C or higher, not only the sum $S_B$ of the area ratios but also the sum $S_A$ of the area ratios decrease, and as a result, $S_A - S_B \geq 0$ cannot be satisfied.

(Average temperature rising rate $V_1$ from 200°C to holding temperature $T_1$)

In the manufacture of the non-oriented electrical steel sheet according to the present invention, the average temperature rising rate $V_1$ from 200°C to the holding temperature $T_1$ is set to 50°C/s or more. The reason of the average temperature rising rate $V_1$ being set to 50°C/s or more is that the sum $S_A$ of the area ratios of the crystal grains with <100> oriented in the rolling direction or the direction perpendicular to the rolling direction and the sum $S_B$ of the area ratios of the crystal grains with <111> oriented in the rolling direction or the direction perpendicular to the rolling direction satisfy $S_A - S_B \geq 0$, and a desired steel sheet structure is obtained. When the average temperature rising rate $V_1$ is less than the above rate, recovery occurs before the holding at the holding temperature $T_1$, and thus the recovery behavior cannot be sufficiently controlled, and both $S_B$ and $S_A$ decrease, and as a result, $S_A - S_B \geq 0$ cannot be satisfied. The average temperature rising rate $V_1$ from 200°C to the holding temperature $T_1$ is preferably 70°C/s or more, and more preferably 100°C/s or more. The upper limit is not particularly required to be set, but it is preferable to set the upper limit to 500°C/s because temperature unevenness is likely to occur when the temperature rising rate is excessively high.

(Holding time t at holding temperature $T_1$)

In the manufacture of the non-oriented electrical steel sheet according to the present invention, the holding time t at the holding temperature $T_1$ is 1 second or more and 10 seconds or less. The reason of the holding time t being set to 1 second or more and 10 seconds or less is that the sum $S_A$ of the area ratios of the crystal grains with <100> oriented in the rolling direction or the direction perpendicular to the rolling direction and the sum $S_B$ of the area ratios of the crystal grains with <111> oriented in the rolling direction or the direction perpendicular to the rolling direction satisfy $S_A - S_B \geq 0$, and a desired steel sheet structure is obtained. When the holding time t is less than 1 second, since tissue recovery does not sufficiently occur, $S_B$ becomes high, and as a result, $S_A - S_B \geq 0$ cannot be satisfied. On the other hand, when the holding time t exceeds 10 seconds, tissue recovery occurs excessively, and not only $S_B$ but also $S_A$ decreases, and as a result, $S_A - S_B \geq 0$ cannot be satisfied.

(Average temperature rising rate $V_2$ from holding temperature $T_1$ to 750°C)

In the manufacture of the non-oriented electrical steel sheet according to the present invention, the average temperature rising rate $V_2$ from the holding temperature $T_1$ to 750°C is set to 15°C/s or more. The reason of the average temperature rising rate $V_2$ being set to 15°C/s or more is that the sum $S_A$ of the area ratios of the crystal grains with <100> oriented in the rolling direction or the direction perpendicular to the rolling direction and the sum $S_B$ of the area ratios of the crystal grains with <111> oriented in the rolling direction or the direction perpendicular to the rolling direction satisfy $S_A - S_B \geq 0$, and a desired steel sheet structure is obtained. When the average temperature rising rate $V_2$ is less than 15°C/s, the selectivity of the position where the recrystallization nucleus is generated is enhanced, and the frequency of generation of the crystal grains with <111> oriented in the rolling direction or the direction perpendicular to the rolling direction increases, and thus $S_B$ increases. As a result, $S_A - S_B \geq 0$ cannot be satisfied. The average temperature rising rate $V_2$ is preferably 20°C/s or more, and more preferably 30°C/s or more. The upper limit is not particularly required to be set, but it is preferable to set the upper limit to 200°C/s because temperature unevenness is likely to occur when the temperature rising rate is excessively high.

(Annealing temperature $T_2$)

In the manufacture of the non-oriented electrical steel sheet according to the present invention, the annealing

temperature $T_2$ is set to 750°C or higher and 850°C or lower. The reason of the annealing temperature $T_2$ being set to 750°C or higher and 850°C or lower is to obtain a desired steel sheet structure by setting the average crystal grain size to 50 $\mu$m or less. When the annealing temperature $T_2$ is lower than 750°C, recrystallization does not sufficiently progress, resulting in a steel sheet structure in which a large number of processed structures remain. Since this non-recrystallized portion includes many regions where <111> is oriented in the direction perpendicular to the rolling direction, $S_B$ increases. As a result, $S_A - S_B \geq 0$ cannot be satisfied. When the annealing temperature $T_2$ is 750°C or higher, sufficient recrystallization occurs, and $S_A - S_B \geq 0$ can be satisfied. The annealing temperature $T_2$ is preferably 775°C or higher. On the other hand, when the annealing temperature $T_2$ is higher than 850°C, recrystallized grains excessively grow, and the average crystal grain size cannot be 50 $\mu$m or less. Thus, the annealing temperature $T_2$ is set to 850°C or lower. The temperature is preferably 825°C or lower. After heating to the annealing temperature, cooling is performed, and the cooling is preferably performed at a rate of 50°C/s or less from the viewpoint of preventing cooling unevenness.

Examples

Hereinafter, the present invention will be specifically described with reference to Examples. However, the present invention is not limited to Examples.

<Manufacture of cold-rolled and annealed sheet>

Molten steels having component compositions shown in Tables 1-1 and 2 were each melted by a generally known method and continuously cast to form a slab (steel material) having a thickness of 230 mm. The obtained slab was subjected to hot rolling to obtain a hot-rolled sheet having a sheet thickness of 2.0 mm. The obtained hot-rolled sheet was subjected to hot-rolled sheet annealing and pickling by a known method, and then subjected to cold rolling to a sheet thickness shown in Tables 2-1 and 2 to obtain a cold-rolled sheet. The obtained cold-rolled sheet was annealed under the conditions shown in Tables 2-1 and 2, and then coated by a known method to obtain a cold-rolled and annealed sheet (non-oriented electrical steel sheet).

Table 1-1

| Steel type | Component composition [mass%] | | | | | | | | | | | | | | | | Note |
|---|---|---|---|---|---|---|---|---|---|---|---|---|---|---|---|---|---|
| | C | Si | Mn | P | S | Al | N | Co | Zn | Mo | Cr | Ca | Mg | REM | Sn | Sb | |
| A | 0.0016 | 3.5 | 0.3 | 0.004 | 0.0029 | 0.6 | 0.0022 | - | - | - | - | - | - | - | - | - | Compatible Example |
| B | 0.0038 | 2.4 | 1.2 | 0.011 | 0.0033 | 1.2 | 0.0021 | - | - | - | - | - | - | - | - | - | Compatible Example |
| C | 0.0035 | 3.5 | 0.2 | 0.019 | 0.0017 | 1.1 | 0.0015 | - | - | - | - | - | - | - | - | - | Compatible Example |
| D | 0.0034 | 2.1 | 1.3 | 0.015 | 0.0027 | 0.9 | 0.0024 | - | - | - | - | - | - | - | - | - | Compatible Example |
| E | 0.0033 | 2.2 | 0.6 | 0.005 | 0.0033 | 1.8 | 0.0026 | - | - | - | - | - | - | - | - | - | Compatible Example |
| F | 0.0038 | 2.7 | 2.7 | 0.008 | 0.0021 | 0.5 | 0.0020 | - | - | - | - | - | - | - | - | - | Compatible Example |
| G | 0.0027 | 2.9 | 1.2 | 0.006 | 0.0031 | 1.9 | 0.0024 | - | - | - | - | - | - | - | - | - | Compatible Example |
| H | 0.0009 | 2.3 | 1.2 | 0.011 | 0.0024 | 1.4 | 0.0025 | - | - | - | - | - | - | - | - | - | Compatible Example |
| I | 0.0029 | 2.9 | 1.0 | 0.012 | 0.0037 | 1.2 | 0.0027 | - | - | - | - | - | - | - | - | - | Compatible Example |
| J | 0.0015 | 3.9 | 0.7 | 0.013 | 0.0008 | 1.5 | 0.0023 | - | - | - | - | - | - | - | - | - | Compatible Example |
| K | 0.0047 | 2.2 | 1.3 | 0.009 | 0.0021 | 1.3 | 0.0024 | - | - | - | - | - | - | - | - | - | Compatible Example |
| L | 0.0017 | 0.8 | 0.8 | 0.013 | 0.0007 | 1.5 | 0.0021 | - | - | - | - | - | - | - | - | - | Comparative Example |
| M | 0.0016 | 1.2 | 0.8 | 0.012 | 0.0009 | 1.5 | 0.0022 | - | - | - | - | - | - | - | - | - | Compatible Example |
| N | 0.0013 | 1.5 | 0.7 | 0.011 | 0.0009 | 1.6 | 0.0022 | - | - | - | - | - | - | - | - | - | Compatible Example |
| O | 0.0015 | 4.8 | 0.7 | 0.015 | 0.0005 | 1.5 | 0.0022 | - | - | - | - | - | - | - | - | - | Compatible Example |
| P | 0.0017 | 5.2 | 0.7 | 0.014 | 0.0005 | 1.4 | 0.0024 | - | - | - | - | - | - | - | - | - | Comparative Example |
| Q | 0.0035 | 2.1 | 0.02 | 0.017 | 0.0028 | 0.9 | 0.0023 | - | - | - | - | - | - | - | - | - | Comparative Example |
| R | 0.0036 | 2.1 | 0.08 | 0.013 | 0.0023 | 0.8 | 0.0026 | - | - | - | - | - | - | - | - | - | Compatible Example |
| S | 0.0035 | 2.0 | 3.4 | 0.013 | 0.0030 | 0.8 | 0.0026 | - | - | - | - | - | - | - | - | - | Compatible Example |
| T | 0.0034 | 2.1 | 5.1 | 0.015 | 0.0023 | 1.0 | 0.0022 | - | - | - | - | - | - | - | - | - | Comparative Example |
| U | 0.0031 | 3.0 | 1.0 | 0.011 | 0.0033 | 0.003 | 0.0028 | - | - | - | - | - | - | - | - | - | Comparative Example |
| V | 0.0029 | 3.0 | 1.0 | 0.010 | 0.0038 | 0.012 | 0.0028 | - | - | - | - | - | - | - | - | - | Compatible Example |
| W | 0.0028 | 2.8 | 1.0 | 0.014 | 0.0038 | 2.2 | 0.0027 | - | - | - | - | - | - | - | - | - | Compatible Example |
| X | 0.0030 | 2.9 | 1.1 | 0.012 | 0.0039 | 3.4 | 0.0028 | - | - | - | - | - | - | - | - | - | Comparative Example |

(continued)

| Steel type | Component composition [mass%] | | | | | | | | | | | | | | | | Note |
|---|---|---|---|---|---|---|---|---|---|---|---|---|---|---|---|---|---|
| | C | Si | Mn | P | S | Al | N | Co | Zn | Mo | Cr | Ca | Mg | REM | Sn | Sb | |
| Y | 0.0035 | 3.4 | 0.3 | 0.020 | 0.0018 | 1.1 | 0.0013 | 0.0007 | - | - | - | - | - | - | - | - | Compatible Example |
| Z | 0.0037 | 3.5 | 0.2 | 0.017 | 0.0014 | 1.1 | 0.0016 | 0.0038 | - | - | - | - | - | - | - | - | Compatible Example |
| AA | 0.0037 | 3.4 | 0.2 | 0.018 | 0.0020 | 1.0 | 0.0014 | - | 0.0008 | - | - | - | - | - | - | - | Compatible Example |
| AB | 0.0033 | 3.6 | 0.2 | 0.019 | 0.0016 | 1.1 | 0.0013 | - | 0.0029 | - | - | - | - | - | - | - | Compatible Example |
| AC | 0.0016 | 3.5 | 0.3 | 0.003 | 0.0031 | 0.6 | 0.0023 | - | - | 0.035 | - | - | - | - | - | - | Compatible Example |
| AD | 0.0015 | 3.5 | 0.3 | 0.005 | 0.0028 | 0.6 | 0.0023 | - | - | - | 0.14 | - | - | - | - | - | Compatible Example |
| AE | 0.0017 | 3.6 | 0.4 | 0.005 | 0.0024 | 0.5 | 0.0023 | - | - | - | - | 0.004 | - | - | - | - | Compatible Example |
| AF | 0.0014 | 3.5 | 0.2 | 0.003 | 0.0030 | 0.6 | 0.0020 | - | - | - | - | - | 0.003 | - | - | - | Compatible Example |
| AG | 0.0018 | 3.5 | 0.3 | 0.002 | 0.0029 | 0.6 | 0.0023 | - | - | - | - | - | - | 0.005 | - | - | Compatible Example |
| AH | 0.0017 | 3.5 | 0.4 | 0.006 | 0.0031 | 0.7 | 0.0022 | - | - | - | - | - | - | - | 0.032 | - | Compatible Example |
| AI | 0.0016 | 3.5 | 0.3 | 0.003 | 0.0033 | 0.6 | 0.0024 | - | - | - | - | - | - | - | - | 0.054 | Compatible Example |

Table 1-2

| Steel type | C | Si | Mn | P | S | Al | N | Co | Zn | Mo | Cr | Ca | Mg | REM | Sn | Sb | Cu | Ni | W | Ti | Nb | V | Ta | B | Ga | Pb | As | Ge | Note |
|---|---|---|---|---|---|---|---|---|---|---|---|---|---|---|---|---|---|---|---|---|---|---|---|---|---|---|---|---|---|
| | | | | | | | | | | | | | | Component composition [mass%] | | | | | | | | | | | | | | | |
| AJ | 0.0034 | 3.4 | 0.3 | 0.021 | 0.0013 | 1.0 | 0.0013 | 0.0021 | - | - | - | - | - | - | - | - | - | - | - | - | - | - | - | - | - | - | - | - | Compatible Example |
| AK | 0.0037 | 3.4 | 0.2 | 0.017 | 0.0021 | 1.0 | 0.0017 | - | 0.0046 | - | - | - | - | - | - | - | - | - | - | - | - | - | - | - | - | - | - | - | Compatible Example |
| AL | 0.0014 | 3.4 | 0.4 | 0.003 | 0.0031 | 0.6 | 0.0023 | - | - | 0.013 | - | - | - | - | - | - | - | - | - | - | - | - | - | - | - | - | - | - | Compatible Example |
| AM | 0.0015 | 3.5 | 0.4 | 0.004 | 0.0030 | 0.6 | 0.0021 | - | - | - | 4.3 | - | - | - | - | - | - | - | - | - | - | - | - | - | - | - | - | - | Compatible Example |
| AN | 0.0017 | 3.5 | 0.2 | 0.005 | 0.0030 | 0.6 | 0.0023 | - | - | - | - | 0.001 | - | - | - | - | - | - | - | - | - | - | - | - | - | - | - | - | Compatible Example |
| AO | 0.0016 | 3.5 | 0.3 | 0.003 | 0.0032 | 0.5 | 0.0022 | - | - | - | - | - | 0.096 | - | - | - | - | - | - | - | - | - | - | - | - | - | - | - | Compatible Example |
| AP | 0.0015 | 3.5 | 0.3 | 0.003 | 0.0032 | 0.6 | 0.0023 | - | - | - | - | - | - | 0.093 | - | - | - | - | - | - | - | - | - | - | - | - | - | - | Compatible Example |
| AQ | 0.0015 | 3.5 | 0.3 | 0.003 | 0.0026 | 0.7 | 0.0020 | - | - | - | - | - | - | - | 0.17 | - | - | - | - | - | - | - | - | - | - | - | - | - | Compatible Example |
| AR | 0.0018 | 3.6 | 0.3 | 0.005 | 0.0033 | 0.7 | 0.0024 | - | - | - | - | - | - | - | - | 0.18 | - | - | - | - | - | - | - | - | - | - | - | - | Compatible Example |
| AS | 0.0040 | 2.3 | 1.2 | 0.011 | 0.0031 | 1.2 | 0.0019 | - | - | - | - | - | - | - | - | - | 0.03 | - | - | - | - | - | - | - | - | - | - | - | Compatible Example |
| AT | 0.0038 | 2.5 | 1.2 | 0.011 | 0.0036 | 1.3 | 0.0021 | - | - | - | - | - | - | - | - | - | 0.49 | - | - | - | - | - | - | - | - | - | - | - | Compatible Example |
| AU | 0.0037 | 2.5 | 1.2 | 0.012 | 0.0037 | 1.2 | 0.0023 | - | - | - | - | - | - | - | - | - | - | 0.02 | - | - | - | - | - | - | - | - | - | - | Compatible Example |
| AV | 0.0037 | 2.5 | 1.1 | 0.013 | 0.0030 | 1.2 | 0.0022 | - | - | - | - | - | - | - | - | - | - | 0.46 | - | - | - | - | - | - | - | - | - | - | Compatible Example |
| AW | 0.0032 | 2.3 | 0.5 | 0.003 | 0.0030 | 1.8 | 0.0026 | - | - | - | - | - | - | - | - | - | - | - | 0.006 | - | - | - | - | - | - | - | - | - | Compatible Example |
| AX | 0.0034 | 2.2 | 0.7 | 0.006 | 0.0029 | 1.8 | 0.0024 | - | - | - | - | - | - | - | - | - | - | - | 0.043 | - | - | - | - | - | - | - | - | - | Compatible Example |
| AY | 0.0035 | 2.1 | 0.5 | 0.005 | 0.0036 | 1.8 | 0.0028 | - | - | - | - | - | - | - | - | - | - | - | - | 0.0016 | - | - | - | - | - | - | - | - | Compatible Example |
| AZ | 0.0032 | 2.1 | 0.5 | 0.005 | 0.0033 | 1.9 | 0.0025 | - | - | - | - | - | - | - | - | - | - | - | - | 0.0047 | - | - | - | - | - | - | - | - | Compatible Example |
| BA | 0.0031 | 2.2 | 0.5 | 0.003 | 0.0029 | 1.8 | 0.0026 | - | - | - | - | - | - | - | - | - | - | - | - | - | 0.0007 | - | - | - | - | - | - | - | Compatible Example |
| BB | 0.0032 | 2.2 | 0.5 | 0.005 | 0.0029 | 1.7 | 0.0025 | - | - | - | - | - | - | - | - | - | - | - | - | - | 0.0045 | - | - | - | - | - | - | - | Compatible Example |
| BC | 0.0032 | 2.3 | 0.5 | 0.003 | 0.0032 | 1.7 | 0.0028 | - | - | - | - | - | - | - | - | - | - | - | - | - | - | 0.0011 | - | - | - | - | - | - | Compatible Example |
| BD | 0.0032 | 2.2 | 0.5 | 0.007 | 0.0038 | 1.9 | 0.0024 | - | - | - | - | - | - | - | - | - | - | - | - | - | - | 0.0095 | - | - | - | - | - | - | Compatible Example |
| BE | 0.0034 | 2.2 | 0.6 | 0.003 | 0.0031 | 1.8 | 0.0025 | - | - | - | - | - | - | - | - | - | - | - | - | - | - | - | 0.0004 | - | - | - | - | - | Compatible Example |
| BF | 0.0032 | 2.1 | 0.7 | 0.005 | 0.0030 | 1.8 | 0.0025 | - | - | - | - | - | - | - | - | - | - | - | - | - | - | - | 0.0017 | - | - | - | - | - | Compatible Example |
| BG | 0.0039 | 2.7 | 2.7 | 0.007 | 0.0024 | 0.5 | 0.0020 | - | - | - | - | - | - | - | - | - | - | - | - | - | - | - | - | 0.0002 | - | - | - | - | Compatible Example |
| BH | 0.0038 | 2.7 | 2.6 | 0.006 | 0.0016 | 0.5 | 0.0020 | - | - | - | - | - | - | - | - | - | - | - | - | - | - | - | - | 0.0018 | - | - | - | - | Compatible Example |
| BI | 0.0039 | 2.7 | 2.7 | 0.010 | 0.0020 | 0.5 | 0.0022 | - | - | - | - | - | - | - | - | - | - | - | - | - | - | - | - | - | 0.0002 | - | - | - | Compatible Example |
| BJ | 0.0039 | 2.6 | 2.6 | 0.008 | 0.0022 | 0.5 | 0.0022 | - | - | - | - | - | - | - | - | - | - | - | - | - | - | - | - | - | 0.0047 | - | - | - | Compatible Example |
| BK | 0.0040 | 2.7 | 2.6 | 0.010 | 0.0022 | 0.4 | 0.0022 | - | - | - | - | - | - | - | - | - | - | - | - | - | - | - | - | - | - | 0.0002 | - | - | Compatible Example |
| BL | 0.0040 | 2.6 | 2.6 | 0.007 | 0.0020 | 0.5 | 0.0020 | - | - | - | - | - | - | - | - | - | - | - | - | - | - | - | - | - | - | 0.0019 | - | - | Compatible Example |
| BM | 0.0028 | 2.9 | 1.1 | 0.004 | 0.0026 | 2.0 | 0.0023 | - | - | - | - | - | - | - | - | - | - | - | - | - | - | - | - | - | - | - | 0.004 | - | Compatible Example |
| BN | 0.0028 | 2.9 | 1.1 | 0.004 | 0.0031 | 1.9 | 0.0024 | - | - | - | - | - | - | - | - | - | - | - | - | - | - | - | - | - | - | - | 0.043 | - | Compatible Example |
| BO | 0.0029 | 2.9 | 1.1 | 0.004 | 0.0036 | 1.9 | 0.0025 | - | - | - | - | - | - | - | - | - | - | - | - | - | - | - | - | - | - | - | - | 0.002 | Compatible Example |
| BP | 0.0030 | 3.0 | 1.3 | 0.009 | 0.0036 | 2.0 | 0.0027 | - | - | - | - | - | - | - | - | - | - | - | - | - | - | - | - | - | - | - | - | 0.046 | Compatible Example |

Table 2-1

| No. | Steel type | Sheet thickness [mm] | Cold rolling step | | | | Annealing step | | | | | Note |
|---|---|---|---|---|---|---|---|---|---|---|---|---|
| | | | Work roll diameter D of final pass [mmφ] | Rolling reduction ratio r of final pass [%] | strain rate in final pass [s⁻¹] | Fracture during rolling | Holding temperature T₁ [°C] | Temperature rising rate V₁ [°C/s] | Holding time t [s] | Temperature rising rate V₂ [°C/s] | Annealing temperature T₂ [°C] | |
| 1 | A | 0.25 | 290 | 28 | 780 | - | 490 | 270 | 2 | 34 | 1000 | Invention Example |
| 2 | B | 0.25 | 330 | 23 | 860 | - | 480 | 460 | 3 | 53 | 990 | Invention Example |
| 3 | C | 0.25 | 360 | 31 | 300 | - | 590 | 120 | 9 | 33 | 920 | Invention Example |
| 4 | D | 0.25 | 390 | 27 | 260 | - | 470 | 120 | 7 | 31 | 1010 | Invention Example |
| 5 | E | 0.25 | 360 | 23 | 200 | - | 420 | 480 | 2 | 55 | 940 | Invention Example |
| 6 | F | 0.25 | 340 | 25 | 190 | - | 590 | 320 | 9 | 49 | 1000 | Invention Example |
| 7 | G | 0.25 | 290 | 29 | 700 | - | 440 | 310 | 5 | 37 | 1010 | Invention Example |
| 8 | H | 0.25 | 360 | 24 | 510 | - | 420 | 350 | 3 | 33 | 960 | Invention Example |
| 9 | I | 0.25 | 200 | 33 | 690 | - | 500 | 380 | 3 | 54 | 990 | Invention Example |
| 10 | J | 0.25 | 210 | 34 | 710 | - | 510 | 190 | 3 | 47 | 910 | Invention Example |
| 11 | K | 0.25 | 360 | 24 | 510 | - | 420 | 340 | 3 | 34 | 960 | Invention Example |
| 12 | L | 0.25 | 210 | 34 | 710 | - | 510 | 190 | 3 | 47 | 910 | Comparative Example |

(continued)

| No. | Steel type | Sheet thickness [mm] | Cold rolling | | step | | Annealing step | | | | | Note |
|---|---|---|---|---|---|---|---|---|---|---|---|---|
| | | | Work roll diameter D of final pass [mmφ] | Rolling reduction ratio r of final pass [%] | strain rate in final pass [s⁻¹] | Fracture during rolling | Holding temperature $T_1$ [°C] | Temperature rising rate $V_1$ [°C/s] | Holding time t [s] | Temperature rising rate $V_2$ [°C/s] | Annealing temperature $T_2$ [°C] | |
| 13 | M | 0.25 | 210 | 34 | 710 | - | 510 | 200 | 3 | 47 | 910 | Invention Example |
| 14 | N | 0.25 | 210 | 34 | 710 | - | 510 | 190 | 3 | 49 | 910 | Invention Example |
| 15 | O | 0.25 | 210 | 34 | 710 | - | 510 | 180 | 3 | 49 | 910 | Invention Example |
| 16 | P | 0.25 | 210 | 34 | 710 | - | 510 | 190 | 3 | 46 | 910 | Comparative Example |
| 17 | Q | 0.25 | 390 | 27 | 260 | - | 470 | 120 | 7 | 30 | 1010 | Comparative Example |
| 18 | R | 0.25 | 390 | 27 | 260 | - | 470 | 120 | 7 | 32 | 1010 | Invention Example |
| 19 | S | 0.25 | 390 | 27 | 260 | - | 470 | 120 | 7 | 31 | 1010 | Invention Example |
| 20 | T | 0.25 | 390 | 27 | 260 | - | 470 | 130 | 7 | 33 | 1010 | Comparative Example |
| 21 | U | 0.25 | 200 | 33 | 690 | - | 500 | 370 | 3 | 52 | 990 | Comparative Example |
| 22 | V | 0.25 | 200 | 33 | 690 | - | 500 | 400 | 3 | 56 | 990 | Invention Example |
| 23 | W | 0.25 | 200 | 33 | 690 | - | 500 | 380 | 3 | 54 | 990 | Invention Example |
| 24 | X | 0.25 | 200 | 33 | 690 | - | 500 | 360 | 3 | 55 | 990 | Comparative Example |

| No. | Steel type | Sheet thickness [mm] | Cold rolling | | step | | Annealing step | | | | | Note |
| --- | --- | --- | --- | --- | --- | --- | --- | --- | --- | --- | --- | --- |
| | | | Work roll diameter D of final pass [mm$\phi$] | Rolling reduction ratio r of final pass [%] | strain rate in final pass [s$^{-1}$] | Fracture during rolling | Holding temperature $T_1$ [°C] | Temperature rising rate $V_1$ [°C/s] | Holding time t [s] | Temperature rising rate $V_2$ [°C/s] | Annealing temperature $T_2$ [°C] | |
| 25 | Y | 0.25 | 360 | 31 | 300 | - | 590 | 130 | 9 | 32 | 920 | Invention Example |
| 26 | Z | 0.25 | 360 | 31 | 300 | - | 590 | 120 | 9 | 32 | 920 | Invention Example |
| 27 | AA | 0.25 | 360 | 31 | 300 | - | 590 | 120 | 9 | 33 | 920 | Invention Example |
| 28 | AB | 0.25 | 360 | 31 | 300 | - | 590 | 120 | 9 | 31 | 920 | Invention Example |
| 29 | AC | 0.25 | 290 | 28 | 780 | - | 490 | 260 | 2 | 33 | 1000 | Invention Example |
| 30 | AD | 0.25 | 290 | 28 | 780 | - | 490 | 280 | 2 | 35 | 1000 | Invention Example |
| 31 | AE | 0.25 | 290 | 28 | 780 | - | 490 | 270 | 2 | 34 | 1000 | Invention Example |
| 32 | AF | 0.25 | 290 | 28 | 780 | - | 490 | 270 | 2 | 33 | 1000 | Invention Example |
| 33 | AG | 0.25 | 290 | 28 | 780 | - | 490 | 270 | 2 | 35 | 1000 | Invention Example |
| 34 | AH | 0.25 | 290 | 28 | 780 | - | 490 | 260 | 2 | 33 | 1000 | Invention Example |
| 35 | AI | 0.25 | 290 | 28 | 780 | - | 490 | 270 | 2 | 34 | 1000 | Invention Example |
| 36 | J | 0.25 | 210 | 34 | 710 | - | <u>630</u> | 190 | 3 | 46 | 910 | <u>Comparative Example</u> |

EP 4 406 670 A1

| No. | Steel type | Sheet thickness [mm] | Cold rolling | | strain rate in final pass [s⁻¹] | step | Annealing step | | | | | Note |
|---|---|---|---|---|---|---|---|---|---|---|---|---|
| | | | Work roll diameter D of final pass [mmφ] | Rolling reduction ratio r of final pass [%] | strain rate in final pass [s$^{-1}$] | Fracture during rolling | Holding temperature $T_1$ [°C] | Temperature rising rate $V_1$ [°C/s] | Holding time t [s] | Temperature rising rate $V_2$ [°C/s] | Annealing temperature $T_2$ [°C] | |
| 37 | J | 0.25 | 210 | 34 | 710 | - | 380 | 190 | 3 | 47 | 910 | Comparative Example |
| 38 | D | 0.25 | 390 | 27 | 260 | - | 470 | 30 | 7 | 31 | 1010 | Comparative Example |
| 39 | D | 0.25 | 390 | 27 | 260 | - | 470 | 60 | 7 | 31 | 1010 | Invention Example |
| 40 | D | 0.25 | 390 | 27 | 260 | - | 470 | 90 | 7 | 32 | 1010 | Invention Example |
| 41 | G | 0.25 | 290 | 29 | 700 | - | 440 | 300 | 0 | 37 | 1010 | Comparative Example |
| 42 | G | 0.25 | 290 | 29 | 700 | - | 440 | 300 | 15 | 38 | 1010 | Comparative Example |
| 43 | I | 0.25 | 200 | 33 | 690 | - | 500 | 380 | 3 | 8 | 990 | Comparative Example |
| 44 | I | 0.25 | 200 | 33 | 690 | - | 500 | 400 | 3 | 17 | 990 | Invention Example |
| 45 | I | 0.25 | 200 | 33 | 690 | - | 500 | 380 | 3 | 24 | 990 | Invention Example |
| 46 | C | 0.25 | 360 | 31 | 300 | - | 500 | 120 | 3 | 33 | 860 | Comparative Example |
| 47 | C | 0.25 | 360 | 31 | 300 | - | 590 | 120 | 9 | 33 | 880 | Invention Example |
| 48 | C | 0.25 | 360 | 31 | 300 | - | 590 | 120 | 9 | 34 | 1040 | Invention Example |

(continued)

| No. | Steel type | Sheet thickness [mm] | Cold rolling | | step | | Annealing step | | | | | Note |
|---|---|---|---|---|---|---|---|---|---|---|---|---|
| | | | Work roll diameter D of final pass [mmφ] | Rolling reduction ratio r of final pass [%] | strain rate in final pass [s⁻¹] | Fracture during rolling | Holding temperature $T_1$ [°C] | Temperature rising rate $V_1$ [°C/s] | Holding time t [s] | Temperature rising rate $V_2$ [°C/s] | Annealing temperature $T_2$ [°C] | |
| 49 | C | 0.25 | 360 | 31 | 300 | - | 590 | 130 | 9 | 33 | 1070 | <u>Comparative Example</u> |
| 50 | A | 0.25 | 110 | 28 | 780 | - | 490 | 270 | 2 | 32 | 1000 | Invention Example |
| 51 | A | 0.25 | 160 | 28 | 780 | - | 490 | 280 | 2 | 35 | 1000 | Invention Example |
| 52 | A | 0.25 | 180 | 28 | 780 | - | 490 | 270 | 2 | 33 | 1000 | Invention Example |
| 53 | A | 0.25 | 290 | 9 | 780 | - | 490 | 270 | 2 | 35 | 1000 | Invention Example |
| 54 | A | 0.25 | 290 | 17 | 780 | - | 490 | 280 | 2 | 34 | 1000 | Invention Example |
| 55 | A | 0.25 | 290 | 28 | 60 | - | 490 | 260 | 2 | 34 | 1000 | Invention Example |
| 56 | A | 0.25 | 290 | 28 | 120 | - | 490 | 260 | 2 | 33 | 1000 | Invention Example |
| 57 | A | 0.25 | 290 | 28 | 1400 | Partially fractured | 490 | 260 | 2 | 34 | 1000 | Invention Example |

Note) Underlined part is outside scope of the invention

EP 4 406 670 A1

Table 2-2

| No. | Steel type | Cold rolling | | | step | | Annealing step | | | | | Note |
|---|---|---|---|---|---|---|---|---|---|---|---|---|
| | | Sheet thickness [mm] | Work roll diameter D of final pass [mmφ] | Rolling reduction ratio r of final pass [%] | strain rate in final pass [s⁻¹] | Fracture during rolling | Holding temperature T$_1$ [°C] | Temperature rising rate V$_1$ [°C/s] | Holding time t [s] | Temperature rising rate V$_2$ [°C/s] | Annealing temperature T$_2$ [°C] | |
| 58 | AJ | 0.25 | 360 | 31 | 300 | - | 590 | 120 | 9 | 31 | 780 | Invention Example |
| 59 | AK | 0.25 | 360 | 31 | 300 | - | 590 | 120 | 9 | 32 | 780 | Invention Example |
| 60 | AL | 0.25 | 290 | 28 | 780 | - | 490 | 270 | 2 | 33 | 810 | Invention Example |
| 61 | AM | 0.25 | 290 | 28 | 780 | - | 490 | 260 | 2 | 35 | 810 | Invention Example |
| 62 | AN | 0.25 | 290 | 28 | 780 | - | 490 | 260 | 2 | 34 | 810 | Invention Example |
| 63 | AO | 0.25 | 290 | 28 | 780 | - | 490 | 260 | 2 | 33 | 810 | Invention Example |
| 64 | AP | 0.25 | 290 | 28 | 780 | - | 490 | 280 | 2 | 35 | 810 | Invention Example |
| 65 | AQ | 0.25 | 290 | 28 | 780 | - | 490 | 280 | 2 | 33 | 810 | Invention Example |
| 66 | AR | 0.25 | 290 | 28 | 780 | - | 490 | 260 | 2 | 34 | 810 | Invention Example |
| 67 | AS | 0.25 | 330 | 23 | 860 | - | 480 | 470 | 3 | 53 | 810 | Invention Example |
| 68 | AT | 0.25 | 330 | 23 | 860 | - | 480 | 460 | 3 | 52 | 810 | Invention Example |
| 69 | AU | 0.25 | 330 | 23 | 860 | - | 480 | 480 | 3 | 53 | 810 | Invention Example |

| No. | Steel type | Sheet thickness [mm] | Cold rolling | | step | | Annealing step | | | | | Note |
|---|---|---|---|---|---|---|---|---|---|---|---|---|
| | | | Work roll diameter D of final pass [mmφ] | Rolling reduction ratio r of final pass [%] | strain rate in final pass [s⁻¹] | Fracture during rolling | Holding temperature $T_1$ [°C] | Temperature rising rate $V_1$ [°C/s] | Holding time t [s] | Temperature rising rate $V_2$ [°C/s] | Annealing temperature $T_2$ [°C] | |
| 70 | AV | 0.25 | 330 | 23 | 860 | - | 480 | 450 | 3 | 54 | 810 | Invention Example |
| 71 | AW | 0.25 | 360 | 23 | 200 | - | 420 | 480 | 2 | 57 | 790 | Invention Example |
| 72 | AX | 0.25 | 360 | 23 | 200 | - | 420 | 480 | 2 | 57 | 790 | Invention Example |
| 73 | AY | 0.25 | 360 | 23 | 200 | - | 420 | 470 | 2 | 57 | 790 | Invention Example |
| 74 | AZ | 0.25 | 360 | 23 | 200 | - | 420 | 470 | 2 | 54 | 790 | Invention Example |
| 75 | BA | 0.25 | 360 | 23 | 200 | - | 420 | 490 | 2 | 54 | 790 | Invention Example |
| 76 | BB | 0.25 | 360 | 23 | 200 | - | 420 | 460 | 2 | 55 | 790 | Invention Example |
| 77 | BC | 0.25 | 360 | 23 | 200 | - | 420 | 490 | 2 | 53 | 790 | Invention Example |
| 78 | BD | 0.25 | 360 | 23 | 200 | - | 420 | 490 | 2 | 55 | 790 | Invention Example |
| 79 | BE | 0.25 | 360 | 23 | 200 | - | 420 | 460 | 2 | 55 | 790 | Invention Example |
| 80 | BF | 0.25 | 360 | 23 | 200 | - | 420 | 500 | 2 | 52 | 790 | Invention Example |
| 81 | BG | 0.25 | 340 | 25 | 190 | - | 590 | 320 | 9 | 50 | 810 | Invention Example |

| No. | Steel type | Sheet thickness [mm] | Cold rolling | | step | | Annealing step | | | | | Note |
|---|---|---|---|---|---|---|---|---|---|---|---|---|
| | | | Work roll diameter D of final pass [mmφ] | Rolling reduction ratio of final pass [%] | strain rate in final pass [s$^{-1}$] | Fracture during rolling | Holding temperature $T_1$ [°C] | Temperature rising rate $V_1$ [°C/s] | Holding time t [s] | Temperature rising rate $V_2$ [°C/s] | Annealing temperature $T_2$ [°C] | |
| 82 | BH | 0.25 | 340 | 25 | 190 | - | 590 | 330 | 9 | 50 | 810 | Invention Example |
| 83 | BI | 0.25 | 340 | 25 | 190 | - | 590 | 320 | 9 | 48 | 810 | Invention Example |
| 84 | BJ | 0.25 | 340 | 25 | 190 | - | 590 | 330 | 9 | 51 | 810 | Invention Example |
| 85 | BK | 0.25 | 340 | 25 | 190 | - | 590 | 330 | 9 | 48 | 810 | Invention Example |
| 86 | BL | 0.25 | 340 | 25 | 190 | - | 590 | 320 | 9 | 51 | 810 | Invention Example |
| 87 | BM | 0.25 | 290 | 29 | 700 | - | 440 | 320 | 5 | 36 | 820 | Invention Example |
| 88 | BN | 0.25 | 290 | 29 | 700 | - | 440 | 290 | 5 | 38 | 820 | Invention Example |
| 89 | BO | 0.25 | 290 | 29 | 700 | - | 440 | 300 | 5 | 37 | 820 | Invention Example |
| 90 | BP | 0.25 | 290 | 29 | 700 | - | 440 | 320 | 5 | 39 | 820 | Invention Example |

<Evaluation>

<<Tissue observations

A test piece for tissue observation was collected from the obtained cold-rolled and annealed sheet. Next, the collected test piece was filled with a resin with a surface (RD surface) perpendicular to the rolling direction as an observation surface, and mirror-finished by colloidal silica polishing. Electron backscatter diffraction (EBSD) measurement was performed on the mirror-finished observation surface to obtain local orientation data. At this time, the step size was set to 2.5 $\mu$m, and the measurement region was set to 20 mm$^2$ or more. The size of the measurement region was appropriately adjusted so that the number of crystal grains was 10,000 or more in the subsequent analysis. The measurement may be performed in the entire region by one scan, or the scan results of a plurality of times may be combined using the Combo Scan function. Analysis software: OIM Analysis 8 was used to analyze the obtained local orientation data. Prior to data analysis, coordinate rotation processing was performed so as to have A1 axis// rolling direction, A2 axis// direction perpendicular to rolling direction, and A3 axis// sheet surface direction in the sample coordinate system. In addition, granular average data points were selected under the condition of Formula: GCI[&;5.000,2,0.000,0,0,8.0,1,1,1.0,0;] > 0.1 with Partition Properties of the analysis software, and data points unsuitable for analysis were excluded. At this time, the number of valid data points was 98% or more.

For the data adjusted as described above, the following analysis was performed with the grain tolerance angle set to 5°, the minimum grain size set to 2, the minimum anti grain size set to 2, and both the multiple rows requirement and the anti-grain multiple rows requirement set to OFF as definitions of crystal grain boundaries. The value of the area average obtained using the grain size (diameter) function for the pretreated data was taken as the average crystal grain size. In addition, using the Crystal Direction function, the area ratio of crystal grains in which <100> and <111> are oriented with respect to the four directions of [A1, A2, A3] = [100], [010], [110], and [1-10] in the sample coordinate system was determined. The tolerance angle at the time of calculating the area ratio was set to 15°. When the area ratio of the crystal grains in which <uvw> is oriented in the [u'v'w'] direction in the sample coordinate system is expressed as $S_{<uvw>//[u'v'w']}$, the sum $S_A$ of the area ratios of the crystal grains in which <100> is oriented in the rolling direction or the direction perpendicular to the rolling direction can be obtained as $S_A = S_{<100>//[100]} + S_{<100>//[010]}$ . The area ratio of the orientation satisfying both <100>//[100] and <100>//[010] is doubly counted. The same applies hereinafter. In the same manner, the sum $S_B$ of the area ratios of the crystal grains in which <111> was oriented in the rolling direction or the direction perpendicular to the rolling direction was determined as $S_B = S_{<111>//[100]} + S_{<111>//[100]}$, the sum Sc of the area ratios of the crystal grains in which <100> was oriented in a rolling 45° direction and a rolling -45° direction was determined as $Sc = S_{<100>//[110]} + S_{<100>//[1-10]}$, and the sum $S_D$ of the area ratios of the crystal grains in which <111> was oriented a rolling 45° direction and a rolling -45° direction was determined as $S_D = S_{<111>//[100]} + S_{<111>//[1-10]}$.

«Evaluation of mechanical properties»

From the obtained annealed sheet, a JIS No. 5 tensile test piece having the rolling direction as a tensile direction was collected, and subjected to a tensile test in accordance with JIS Z2241:2011 to measure the tensile strength (TS).

<<Evaluation of magnetic properties>>

From the obtained annealed sheet, a test piece for magnetic measurement having a width of 30 mm and a length of 280 mm, with the length direction as the rolling direction or the direction perpendicular to the rolling direction, was taken, and the magnetic properties of the cold-rolled and annealed sheet were evaluated by the Epstein method in accordance with JIS C2550-1:2011. The evaluation items were saturation magnetic flux density: Bs, magnetic flux density at a magnetic field strength of 5000 A/m: B50, and iron loss W10/800. In addition, for the purpose of examining the anisotropy of magnetic properties, a test piece for magnetic measurement having a width of 30 mm and a length of 280 mm, with the length direction as a rolling 45° direction and a rolling -45° direction, was taken, and the magnetic properties of the cold-rolled and annealed sheet were evaluated by the Epstein method in accordance with JIS C2550-1:2011. The evaluation item was magnetic flux density at a magnetic field strength of 5000 A/m: B50_45°. It was evaluated that the magnetic flux density was good when B50 ≥ 1.57 (T) and B50/Bs ≥ 0.80 were satisfied after the stress-relief annealing, and it was evaluated that the high frequency iron loss characteristics were good when W10/800 ≤ 40 (W/kg) was satisfied after the stress-relief annealing. When ΔB50 = B50 - B50_45° ≤ 0.120 (T) was satisfied after the stress-relief annealing, it was evaluated that the anisotropy of the magnetic properties was small.

Table 3-1

| No. | Average crystal grain size d (μm) | Steel sheet structure | | | | | | Magnetic flux density Bs (T) | Property | | | | | Note |
|---|---|---|---|---|---|---|---|---|---|---|---|---|---|---|
| | | SA [%] | SB [%] | SC [%] | SD [%] | SA-SB [%] | 5SC-SD [%] | | Magnetic flux density B50 (T) | B50/Bs | Iron loss $W_{10/80}$ (W/kg) | Magnetic flux density B50_45° (T) | Anisotropy Δ B50 (T) | |
| 1 | 103 | 19 | 6 | 6 | 25 | 13 | 5 | 1.97 | 1.72 | 0.87 | 30.2 | 1.67 | 0.048 | Invention Example |
| 2 | 124 | 13 | 6 | 6 | 25 | 7 | 5 | 1.98 | 1.71 | 0.86 | 29.7 | 1.66 | 0.047 | Invention Example |
| 3 | 69 | 17 | 4 | 7 | 27 | 13 | 8 | 1.95 | 1.73 | 0.89 | 28.0 | 1.69 | 0.042 | Invention Example |
| 4 | 104 | 19 | 6 | 3 | 11 | 13 | 4 | 200 | 1.76 | 0.88 | 31.5 | 1.71 | 0.053 | Invention Example |
| 5 | 106 | 20 | 6 | 4 | 11 | 14 | 9 | 1.97 | 1.74 | 0.88 | 29.1 | 1.71 | 0.034 | Invention Example |
| 6 | 126 | 17 | 8 | 7 | 27 | 9 | 8 | 1.96 | 1.71 | 0.87 | 27.5 | 1.67 | 0.042 | Invention Example |
| 7 | 124 | 16 | 5 | 4 | 13 | 11 | 7 | 1.92 | 1.69 | 0.88 | 25.1 | 1.65 | 0.038 | Invention Example |
| 8 | 86 | 16 | 5 | 6 | 26 | 11 | 4 | 1.97 | 1.71 | 0.87 | 29.0 | 1.66 | 0.047 | Invention Example |
| 9 | 90 | 19 | 6 | 7 | 28 | 13 | 7 | 1.96 | 1.70 | 0.87 | 28.3 | 1.66 | 0.044 | Invention Example |
| 10 | 100 | 13 | 6 | 5 | 16 | 7 | 9 | 1.91 | 1.65 | 0.86 | 250 | 1.62 | 0.032 | Invention Example |
| 11 | 84 | 15 | 5 | 5 | 21 | 10 | 4 | 1.98 | 1.70 | 0.86 | 29.6 | 1.65 | 0.053 | Invention Example |
| 12 | 66 | 12 | 5 | 6 | 21 | 7 | 9 | 204 | 1.76 | 0.86 | <u>47.7</u> | 1.73 | 0.030 | <u>Comparative Example</u> |
| 13 | 90 | 13 | 6 | 4 | 12 | 7 | 8 | 203 | 1.78 | 0.88 | 38.0 | 1.74 | 0.038 | Invention Example |

(continued)

| No. | Average crystal grain size d (μm) | Steel sheet structure | | | | | | Property | | | | | | Note |
|---|---|---|---|---|---|---|---|---|---|---|---|---|---|---|
| | | SA [%] | SB [%] | SC [%] | SD [%] | SA-SB [%] | 5SC-SD [%] | Magnetic flux density Bs (T) | Magnetic flux density B50 (T) | B50/Bs | Iron loss $W_{10/80}$ (W/kg) | Magnetic flux density B50_45° (T) | Anisotropy Δ B50 (T) | |
| 14 | 99 | 12 | 5 | 5 | 17 | 7 | 8 | 2.01 | 1.75 | 0.87 | 36.3 | 1.71 | 0.041 | Invention Example |
| 15 | 96 | 13 | 6 | 5 | 16 | 7 | 9 | 1.87 | 1.62 | 0.87 | 22.7 | 1.59 | 0.032 | Invention Example |
| 16 | 91 | 13 | 6 | 4 | 12 | 7 | 8 | 1.86 | 1.59 | 0.86 | 22.3 | 1.55 | 0.038 | Comparative Example |
| 17 | 112 | 19 | 6 | 3 | 11 | 13 | 4 | 203 | 1.75 | 0.86 | 46.9 | 1.71 | 0.042 | Comparative Example |
| 18 | 132 | 19 | 6 | 3 | 11 | 13 | 4 | 203 | 1.79 | 0.88 | 360 | 1.74 | 0.048 | Invention Example |
| 19 | 120 | 21 | 7 | 3 | 11 | 14 | 4 | 1.96 | 1.68 | 0.86 | 35.4 | 1.64 | 0.043 | Invention Example |
| 20 | 95 | 19 | 6 | 3 | 11 | 13 | 4 | 1.91 | 1.67 | 0.87 | 42.1 | 1.63 | 0.041 | Comparative Example |
| 21 | 96 | 19 | 7 | 6 | 23 | 12 | 7 | 2.01 | 1.74 | 0.87 | 43.3 | 1.70 | 0.038 | Comparative Example |
| 22 | 104 | 17 | 5 | 7 | 28 | 12 | 7 | 2.01 | 1.77 | 0.88 | 36.1 | 1.73 | 0.039 | Invention Example |
| 23 | 136 | 19 | 6 | 7 | 28 | 13 | 7 | 1.92 | 1.67 | 0.87 | 37.6 | 1.63 | 0.042 | Invention Example |
| 24 | 93 | 20 | 6 | 7 | 27 | 14 | 8 | 1.86 | 1.65 | 0.89 | 40.7 | 1.61 | 0.038 | Comparative Example |
| 25 | 97 | 19 | 4 | 3 | 11 | 15 | 4 | 1.96 | 1.76 | 0.90 | 27.5 | 1.72 | 0.044 | Invention Example |
| 26 | 106 | 21 | 4 | 3 | 11 | 17 | 4 | 1.96 | 1.78 | 0.91 | 27.0 | 1.74 | 0.043 | Invention Example |

| No. | Steel sheet structure | | | | | | | Property | | | | | | Note |
|-----|----------------------|---|---|---|---|---|---|----------|---|---|---|---|---|------|
| | Average crystal grain size d (μm) | SA [%] | SB [%] | SC [%] | SD [%] | SA-SB [%] | 5SC-SD [%] | Magnetic flux density Bs (T) | Magnetic flux density B50 (T) | B50/Bs | Iron loss $W_{10/80}$ (W/kg) | Magnetic flux density B50_45° (T) | Anisotropy Δ B50 (T) | |
| 27 | 108 | 18 | 4 | 5 | 13 | 14 | 12 | 1.96 | 1.68 | 0.86 | 29.4 | 1.65 | 0.026 | Invention Example |
| 28 | 67 | 17 | 4 | 6 | 16 | 13 | 14 | 1.95 | 1.73 | 0.89 | 28.1 | 1.71 | 0.025 | Invention Example |
| 29 | 94 | 19 | 7 | 5 | 20 | 12 | 5 | 1.98 | 1.70 | 0.86 | 30.7 | 1.66 | 0.045 | Invention Example |
| 30 | 110 | 18 | 6 | 6 | 25 | 12 | 5 | 1.98 | 1.71 | 0.87 | 30.1 | 1.67 | 0.045 | Invention Example |
| 31 | 91 | 20 | 7 | 5 | 20 | 13 | 5 | 1.97 | 1.69 | 0.86 | 30.2 | 1.65 | 0.044 | Invention Example |
| 32 | 123 | 19 | 6 | 7 | 30 | 13 | 5 | 1.98 | 1.75 | 0.89 | 29.6 | 1.71 | 0.040 | Invention Example |
| 33 | 97 | 20 | 7 | 6 | 25 | 13 | 5 | 1.97 | 1.70 | 0.86 | 30.2 | 1.65 | 0.047 | Invention Example |
| 34 | 137 | 17 | 5 | 6 | 25 | 12 | 5 | 1.97 | 1.77 | 0.90 | 28.7 | 1.72 | 0.049 | Invention Example |
| 35 | 109 | 17 | 5 | 6 | 25 | 12 | 5 | 1.98 | 1.78 | 0.90 | 29.3 | 1.73 | 0.050 | Invention Example |
| 36 | 100 | 13 | 15 | 5 | 15 | -2 | 10 | 1.91 | 1.54 | 0.81 | 42.3 | 1.50 | 0.037 | Comparative Example |
| 37 | 93 | 5 | 6 | 5 | 16 | -1 | 9 | 1.91 | 150 | 0.79 | 40.5 | 1.46 | 0.038 | Comparative Example |
| 38 | 117 | 3 | 5 | 3 | 11 | -2 | 4 | 200 | 1.55 | 0.77 | 45.4 | 1.50 | 0.047 | Comparative Example |
| 39 | 115 | 9 | 7 | 3 | 11 | 2 | 4 | 200 | 1.69 | 0.84 | 35.9 | 1.64 | 0.050 | Invention Example |

EP 4 406 670 A1

(continued)

| No. | Steel sheet structure | | | | | | | Property | | | | | | Note |
|---|---|---|---|---|---|---|---|---|---|---|---|---|---|---|
| | Average crystal grain size d ($\mu$m) | SA [%] | SB [%] | SC [%] | SD [%] | SA-SB [%] | 5SC-SD [%] | Magnetic flux density Bs (T) | Magnetic flux density B50 (T) | B50/Bs | Iron loss $W_{10/80}$ (W/kg) | Magnetic flux density B50_45° (T) | Anisotropy $\Delta$ B50 (T) | |
| 40 | 117 | 9 | 5 | 3 | 11 | 4 | 4 | 200 | 1.69 | 0.84 | 35.9 | 1.64 | 0.051 | Invention Example |
| 41 | 106 | 17 | 18 | 4 | 13 | -1 | 7 | 1.92 | 1.50 | 0.78 | 41.5 | 1.46 | 0.038 | Comparative Example |
| 42 | 127 | 3 | 5 | 4 | 12 | -2 | 8 | 1.92 | 1.53 | 0.80 | 40.9 | 1.49 | 0.042 | Comparative Example |
| 43 | 95 | 16 | 17 | 8 | 32 | -1 | 8 | 2.01 | 1.61 | 0.80 | 46.1 | 1.57 | 0.037 | Comparative Example |
| 44 | 96 | 15 | 14 | 7 | 28 | 1 | 7 | 2.01 | 1.66 | 0.83 | 38.1 | 1.62 | 0.036 | Invention Example |
| 45 | 129 | 15 | 11 | 8 | 33 | 4 | 7 | 2.01 | 1.71 | 0.85 | 37.2 | 1.67 | 0.042 | Invention Example |
| 46 | 53 | 17 | 4 | 3 | 11 | 13 | 4 | 1.96 | 1.70 | 0.87 | 42.9 | 1.65 | 0.048 | Comparative Example |
| 47 | 62 | 17 | 4 | 3 | 11 | 13 | 4 | 1.96 | 1.69 | 0.86 | 37.4 | 1.65 | 0.041 | Invention Example |
| 48 | 193 | 18 | 4 | 3 | 11 | 14 | 4 | 1.96 | 1.72 | 0.88 | 36.8 | 1.68 | 0.043 | Invention Example |
| 49 | 232 | 18 | 4 | 3 | 11 | 14 | 4 | 1.96 | 1.68 | 0.86 | 43.3 | 1.64 | 0.045 | Comparative Example |
| 50 | 88 | 25 | 6 | 5 | 26 | 19 | -1 | 1.97 | 1.74 | 0.88 | 29.6 | 1.60 | 0.139 | Invention Example |
| 51 | 106 | 25 | 6 | 5 | 24 | 19 | 1 | 1.97 | 1.76 | 0.89 | 29.3 | 1.69 | 0.070 | Invention Example |
| 52 | 122 | 25 | 7 | 4 | 17 | 18 | 3 | 1.97 | 1.75 | 0.89 | 29.5 | 1.70 | 0.055 | Invention Example |

(continued)

| No. | Average crystal grain size d (μm) | Steel sheet structure | | | | | | Property | | | | | | Note |
|---|---|---|---|---|---|---|---|---|---|---|---|---|---|---|
| | | SA [%] | SB [%] | SC [%] | SD [%] | SA-SB [%] | 5SC-SD [%] | Magnetic flux density Bs (T) | Magnetic flux density B50 (T) | B50/Bs | Iron loss $W_{10/80}$ (W/kg) | Magnetic flux density B50_45° (T) | Anisotropy Δ B50 (T) | |
| 53 | 116 | 24 | 6 | 5 | 27 | 18 | -2 | 1.97 | 1.73 | 0.88 | 29.8 | 1.60 | 0.127 | Invention Example |
| 54 | 138 | 24 | 6 | 4 | 20 | 18 | 0 | 1.97 | 1.73 | 0.88 | 29.8 | 1.63 | 0.096 | Invention Example |
| 55 | 139 | 23 | 6 | 4 | 21 | 17 | -1 | 1.97 | 1.75 | 0.89 | 29.5 | 1.62 | 0.131 | Invention Example |
| 56 | 99 | 25 | 6 | 5 | 24 | 19 | 1 | 1.97 | 1.75 | 0.89 | 29.5 | 1.68 | 0.067 | Invention Example |
| 57 | 94 | 19 | 6 | 6 | 25 | 13 | 5 | 1.97 | 1.73 | 0.88 | 300 | 1.69 | 0.045 | Invention Example |

Note) Underlined part is outside scope of the invention

Table 3-2

| No. | Steel sheet structure | | | | | | | Mechanical property | Magnetic property after stress-relief annealing | | | | | | Note |
| | Average crystal grain size d ($\mu$m) | SA [%] | SB [%] | SC [%] | SD [%] | SA-SB [%] | 5SC-SD [%] | Tensile strength TS (MPa) | Magnetic flux density Bs (T) | Magnetic flux density B50 (T) | B50/Bs | Ironloss $W_{10/800}$ (W/kg) | Magnetic flux density B50 45° (T) | Anisotropy $\triangle$B50 (T) | |
|---|---|---|---|---|---|---|---|---|---|---|---|---|---|---|---|
| 58 | 29 | 24 | 8 | 7 | 29 | 16 | 6 | 713 | 196 | 1.77 | 0.90 | 27.4 | 1.73 | 0.045 | Invention Example |
| 59 | 30 | 18 | 7 | 6 | 17 | 11 | 13 | 706 | 1.96 | 1.65 | 0.84 | 29.3 | 1.62 | 0.028 | Invention Example |
| 60 | 31 | 19 | 9 | 6 | 22 | 10 | 8 | 729 | 1.97 | 1.66 | 0.84 | 31.1 | 1.63 | 0.034 | Invention Example |
| 61 | 28 | 19 | 8 | 5 | 18 | 11 | 7 | 705 | 1.97 | 1.66 | 0.84 | 30.8 | 1.63 | 0.035 | Invention Example |
| 62 | 31 | 21 | 9 | 5 | 18 | 12 | 7 | 694 | 1.97 | 1.72 | 0.87 | 29.9 | 1.68 | 0.041 | Invention Example |
| 63 | 40 | 17 | 7 | 5 | 18 | 10 | 7 | 672 | 1.97 | 1.67 | 0.85 | 30.6 | 1 63 | 0.039 | Invention Example |
| 64 | 34 | 19 | 8 | 5 | 17 | 11 | 8 | 683 | 1.97 | 1.69 | 0.86 | 30.3 | 1.65 | 0.038 | Invention Example |
| 65 | 33 | 21 | 9 | 5 | 17 | 12 | 8 | 695 | 1.97 | 1.78 | 0.90 | 29.1 | 1.74 | 0.038 | Invention Example |
| 66 | 34 | 20 | 9 | 5 | 19 | 11 | 6 | 690 | 1.97 | 1.77 | 0.90 | 29.2 | 1.73 | 0.038 | Invention Example |
| 67 | 33 | 9 | 4 | 7 | 26 | 5 | 9 | 639 | 198 | 1.65 | 0.83 | 30.6 | 1.62 | 0.030 | Invention Example |
| 68 | 30 | 12 | 6 | 5 | 17 | 6 | 8 | 654 | 198 | 1.71 | 0.86 | 29.7 | 1.68 | 0.033 | Invention Example |
| 69 | 28 | 11 | 5 | 6 | 21 | 6 | 9 | 655 | 1.98 | 1.68 | 0.85 | 30.2 | 1.65 | 0.032 | Invention Example |

(continued)

| No. | Average crystal grain size d (μm) | Steel sheet structure | | | | | | Mechanical property | Magnetic property after stress-relief annealing | | | | | | Note |
|---|---|---|---|---|---|---|---|---|---|---|---|---|---|---|---|
| | | SA [%] | SB [%] | SC [%] | SD [%] | SA-SB [%] | 5SC-SD [%] | Tensile strength TS (MPa) | Magnetic flux density Bs (T) | Magnetic flux density B50 (T) | B50/Bs | Iron loss $W_{10/800}$ (W/kg) | Magnetic flux density B50 45° (T) | Anisotropy ΔB50 (T) | |
| 70 | 33 | 10 | 4 | 5 | 17 | 6 | 8 | 645 | 1.98 | 1.66 | 0.84 | 30.5 | 1.62 | 0.038 | Invention Example |
| 71 | 27 | 14 | 4 | 6 | 25 | 10 | 5 | 687 | 1.97 | 1.68 | 0.85 | 29.9 | 1.64 | 0.040 | Invention Example |
| 72 | 35 | 15 | 4 | 5 | 20 | 11 | 5 | 662 | 1.97 | 1.66 | 0.84 | 30.2 | 1.61 | 0.050 | Invention Example |
| 73 | 26 | 15 | 4 | 6 | 25 | 11 | 5 | 692 | 1.97 | 1.69 | 0.86 | 29.8 | 1.65 | 0.039 | Invention Example |
| 74 | 21 | 14 | 4 | 6 | 25 | 10 | 5 | 700 | 1.97 | 1.67 | 0.85 | 30.1 | 1.63 | 0.044 | Invention Example |
| 75 | 25 | 14 | 4 | 6 | 25 | 10 | 5 | 684 | 1.97 | 1.66 | 0.84 | 30.2 | 1.62 | 0.044 | Invention Example |
| 76 | 23 | 14 | 4 | 5 | 20 | 10 | 5 | 698 | 1.97 | 1.72 | 0.87 | 29.4 | 1.68 | 0037 | Invention Example |
| 77 | 25 | 13 | 3 | 6 | 25 | 10 | 5 | 685 | 1.97 | 1.70 | 0.86 | 29.7 | 1.66 | 0.040 | Invention Example |
| 78 | 34 | 15 | 4 | 6 | 25 | 11 | 5 | 663 | 1.97 | 1.67 | 0.85 | 30.1 | 1.62 | 0.046 | Invention Example |
| 79 | 22 | 16 | 4 | 7 | 30 | 12 | 5 | 706 | 1.97 | 1.70 | 0.86 | 29.7 | 1.66 | 0.040 | Invention Example |
| 80 | 27 | 15 | 4 | 6 | 25 | 11 | 5 | 687 | 1.97 | 1.67 | 0.85 | 30.1 | 1.62 | 0.047 | Invention Example |
| 81 | 38 | 18 | 5 | 7 | 31 | 13 | 4 | 682 | 1.96 | 1.70 | 0.87 | 27.7 | 1.66 | 0.040 | Invention Example |

| No. | Steel sheet structure | | | | | | | Mechanical property | Magnetic property after stress-relief annealing | | | | | | Note |
|-----|----------------------------------------|----------|----------|----------|----------|----------------|------------------|----------------------------|------------------------------------|--------------------------------------------|--------|---------------------------------------|------------------------------------------------|------------------------|----------------------|
|     | Average crystal grain size d ($\mu$m) | SA [%] | SB [%] | SC [%] | SD [%] | SA-SB [%] | 5SC-SD [%] | Tensile strength TS (MPa) | Magnetic flux density Bs (T) | Magnetic flux density B50 (T) | B50/Bs | Ironloss $W_{10/800}$ (W/kg) | Magnetic flux density B50 45° (T) | Anisotropy $\triangle$B50 (T) |                      |
| 82  | 26 | 16 | 4 | 7 | 31 | 12 | 4 | 709 | 1.96 | 1.71 | 0.87 | 27.5 | 1.66 | 0.053 | Invention Example |
| 83  | 29 | 15 | 4 | 8 | 26 | 11 | 4 | 705 | 1.96 | 1.66 | 0.85 | 28.2 | 1.62 | 0.044 | Invention Example |
| 84  | 40 | 16 | 4 | 6 | 26 | 12 | 4 | 676 | 1.96 | 1.67 | 0.85 | 28.1 | 1.62 | 0.052 | Invention Example |
| 85  | 32 | 17 | 5 | 6 | 26 | 12 | 4 | 690 | 1.96 | 1.69 | 0.86 | 27.8 | 1.64 | 0.051 | Invention Example |
| 86  | 28 | 14 | 3 | 7 | 31 | 11 | 4 | 702 | 1.96 | 1.69 | 0.86 | 27.8 | 1.64 | 0.048 | Invention Example |
| 87  | 30 | 12 | 5 | 6 | 23 | 7 | 7 | 695 | 1.92 | 1.74 | 0.91 | 24.2 | 1.70 | 0.040 | Invention Example |
| 88  | 37 | 11 | 4 | 6 | 22 | 7 | 8 | 680 | 192 | 1.75 | 0.91 | 24.1 | 1.71 | 0.039 | Invention Example |
| 89  | 28 | 11 | 4 | 6 | 22 | 7 | 8 | 706 | 192 | 1.73 | 0.90 | 24.4 | 1.69 | 0.042 | Invention Example |
| 90  | 30 | 12 | 5 | 6 | 23 | 7 | 7 | 693 | 192 | 1.76 | 0.92 | 24.0 | 1.73 | 0.035 | Invention Example |

EP 4 406 670 A1

31

From the results of Tables 3-1 and 2, it can be seen that the non-oriented electrical steel sheets according to the present invention all have high tensile strength, and have both excellent magnetic flux density and excellent high-frequency iron loss characteristics after stress-relief annealing.

Industrial Applicability

According to the present invention, it is possible to provide a non-oriented electrical steel sheet having high strength and a high magnetic flux density and high-frequency low iron loss even when subjected to stress-relief annealing, and a method for manufacturing the same.

**Claims**

1. A non-oriented electrical steel sheet comprising, by mass%,

   C: 0.010% or less,
   Si: 1.0% or more and 5.0% or less,
   Mn: 0.05% or more and 5.0% or less,
   P: 0.1% or less,
   S: 0.01% or less,
   Al: 3.0% or less,
   N: 0.005% or less, and
   the balance being Fe and inevitable impurities,
   wherein an average crystal grain size is 50 $\mu$m or less, and
   a sum $S_A$ of area ratios of crystal grains with <100> oriented in a rolling direction or a direction perpendicular to the rolling direction and a sum $S_B$ of area ratios of crystal grains with <111> oriented in the rolling direction or the direction perpendicular to the rolling direction satisfy $S_A - S_B \geq 0$.

2. The non-oriented electrical steel sheet according to claim 1, wherein a sum Sc of area ratios of crystal grains with <100> oriented in a rolling 45° direction and a rolling -45° direction and a sum $S_D$ of area ratios of crystal grains with <111> oriented in the rolling 45° direction and the rolling -45° direction satisfy $5 \times Sc - S_D \geq 0$.

3. The non-oriented electrical steel sheet according to claim 1 or 2, further comprising Co in an amount of 0.0005% or more and 0.0050% or less by mass%.

4. The non-oriented electrical steel sheet according to any one of claims 1 to 3, further comprising Zn in an amount of 0.0005% or more and 0.0050% or less by mass%.

5. The non-oriented electrical steel sheet according to any one of claims 1 to 4, further comprising, by mass%, at least one component selected from Groups A to D shown below and one or two or more selected from the group selected from Cu: 0% or more and 0.5% or less, Ni: 0% or more and 0.5% or less, W: 0% or more and 0.05% or less, Ti: 0% or more and 0.005%, Nb: 0% or more and 0.005% or less, V: 0% or more and 0.010% or less, Ta: 0% or more and 0.002% or less, B: 0% or more and 0.002% or less, Ga: 0% or more and 0.005% or less, Pb: 0% or more and 0.002% or less, As: 0% or more and 0.05% or less, and Ge: 0% or more and 0.05% or less,

   · Group A; Mo: 0.01% or more and 0.20% or less
   · Group B; Cr: 0.1% or more and 5.0% or less
   · Group C; Any one or two or more of Ca: 0.001% or more and 0.10% or less, Mg: 0.001% or more and 0.10% or less, and REM: 0.001% or more and 0.10% or less
   · Group D; Any one or two of Sn: 0.001% or more and 0.20% or less and Sb: 0.001% or more and 0.20% or less.

6. A method for manufacturing the non-oriented electrical steel sheet according to any one of claims 1 to 5, the method comprising:

   a hot rolling step of subjecting a steel material having a composition of the non-oriented electrical steel sheet to hot rolling to obtain a hot rolled sheet;
   a hot-rolled sheet annealing step of subjecting the hot-rolled sheet to hot-rolled sheet annealing as necessary;
   a pickling step of subjecting the hot-rolled sheet and the hot-rolled sheet subjected to the hot-rolled sheet annealing to pickling;

a cold rolling step of subjecting the hot-rolled sheet subjected to the pickling to cold rolling to obtain a cold-rolled sheet; and

an annealing step of heating the cold-rolled sheet to an annealing temperature of $T_2$ of 750°C or higher and 850°C or lower and cooling the sheet to obtain a cold-rolled and annealed sheet under conditions of

an average temperature rising rate $V_1$ of 50°C/s or more, from 200°C to a holding temperature $T_1$ of 400°C or higher and 600°C or lower,

a holding time t of 1 second or more and 10 seconds or less, at the holding temperature $T_1$, and

an average temperature rising rate $V_2$ of 15°C/s or more, from the holding temperature $T_1$ to 750°C.

7. The method for manufacturing a non-oriented electrical steel sheet according to claim 6, wherein the cold rolling step is performed under conditions of a work roll diameter of a final pass of 150 mm$\phi$ or more, a rolling reduction ratio of the final pass of 15% or more, and a strain rate of the final pass of 100 s$^{-1}$ or more and 1300 s$^{-1}$ or less.

## INTERNATIONAL SEARCH REPORT

International application No.

**PCT/JP2022/045666**

### A. CLASSIFICATION OF SUBJECT MATTER

*B21B 3/02*(2006.01)i; *C21D 8/12*(2006.01)i; *C21D 9/46*(2006.01)i; *C22C 38/00*(2006.01)i; *C22C 38/06*(2006.01)i; *C22C 38/60*(2006.01)i; *B21B 1/22*(2006.01)i; *H01F 1/147*(2006.01)i
FI:   C22C38/00 303U; C21D8/12 A; C21D9/46 501A; C22C38/06; C22C38/60; B21B3/02; B21B1/22 K; H01F1/147 175

According to International Patent Classification (IPC) or to both national classification and IPC

### B. FIELDS SEARCHED

Minimum documentation searched (classification system followed by classification symbols)

B21B3/02; C21D8/12; C21D9/46; C22C38/00-C22C38/60; B21B1/22; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2002-146491 A (KAWASAKI STEEL CORPORATION) 22 May 2002 (2002-05-22) claims, paragraphs [0010]-[0017], [0027]-[0039], examples 1, 3, tables 1, 4-5 | 1-7 |
| A | JP 59-70722 A (KAWASAKI STEEL CORPORATION) 21 April 1984 (1984-04-21) entire text, all drawings | 1-7 |
| A | WO 2011/105609 A1 (NATIONAL UNIVERSITY CORPORATION, YOKOHAMA NATIONAL UNIVERSITY) 01 September 2011 (2011-09-01) entire text, all drawings | 1-7 |
| A | KR 10-2021-0080726 A (POSCO) 01 July 2021 (2021-07-01) entire text, all drawings | 1-7 |

☐ Further documents are listed in the continuation of Box C.        ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/045666**

| Patent document cited in search report | | | Publication date (day/month/year) | Patent family member(s) | | | Publication date (day/month/year) |
|---|---|---|---|---|---|---|---|
| JP | 2002-146491 | A | 22 May 2002 | (Family: none) | | | |
| JP | 59-70722 | A | 21 April 1984 | (Family: none) | | | |
| WO | 2011/105609 | A1 | 01 September 2011 | US | 2012/0312432 | A1 | |
| | | | | entire text, all drawings | | | |
| | | | | EP | 2540845 | A1 | |
| | | | | CN | 102869795 | A | |
| | | | | KR | 10-2012-0127652 | A | |
| KR | 10-2021-0080726 | A | 01 July 2021 | EP | 4079887 | A2 | |
| | | | | entire text, all drawings | | | |
| | | | | WO | 2021/125855 | A2 | |
| | | | | CN | 115176044 | A | |

Form PCT/ISA/210 (patent family annex) (January 2015)

35

**EP 4 406 670 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008050686 A

- JP H11343544 A